(19) Europäisches Patentamt
European Patent Office
Office européen des brevets

(11) EP 4 744 884 A1

(12) **EUROPEAN PATENT APPLICATION**
published in accordance with Art. 153(4) EPC

(43) Date of publication:
**20.05.2026 Bulletin 2026/21**

(21) Application number: **23945176.8**

(22) Date of filing: **20.09.2023**

(51) International Patent Classification (IPC):
***B32B 5/20*** *(2006.01)* ***B32B 27/00*** *(2006.01)*
***C09J 7/35*** *(2018.01)* ***C09J 11/08*** *(2006.01)*
***C09J 163/00*** *(2006.01)* ***C09J 201/00*** *(2006.01)*

(52) Cooperative Patent Classification (CPC):
**B32B 5/20; B32B 15/092; B32B 27/00; C09J 5/08; C09J 7/30; C09J 7/35; C09J 11/08; C09J 163/00; C09J 201/00**

(86) International application number:
**PCT/JP2023/034060**

(87) International publication number:
**WO 2025/013306 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.07.2023 JP 2023114269**

(71) Applicant: **Dai Nippon Printing Co., Ltd.**
**Tokyo 162-8001 (JP)**

(72) Inventors:
- **HOSHI, Kentaro**
  **Tokyo 162-8001 (JP)**
- **SHIMADA, Shinya**
  **Tokyo 162-8001 (JP)**
- **NAMATAME, Shingo**
  **Tokyo 162-8001 (JP)**
- **HASEGAWA, Izumi**
  **Tokyo 162-8001 (JP)**
- **KODANI, Junko**
  **Tokyo 162-8001 (JP)**
- **KANDA, Nobuyuki**
  **Tokyo 162-8001 (JP)**

(74) Representative: **Beck Greener LLP**
**Fulwood House**
**12 Fulwood Place**
**London WC1V 6HR (GB)**

(54) **ARTICLE, METHOD FOR PRODUCING ARTICLE, FOAMING ADHESIVE SHEET, AND ADHESIVE COMPOSITION**

(57) The present disclosure provides a product comprising a first member, a second member and an adhesive member disposed between the first member and the second member, wherein the adhesive member includes at least a cured adhesive layer; the cured adhesive layer is a foam layer including a foamed and cured product of an adhesive composition including a curable adhesive and a foaming agent; the curable adhesive is a thermosetting adhesive, and the foaming agent is a thermally expandable microcapsule; and in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

[FIG. 1]

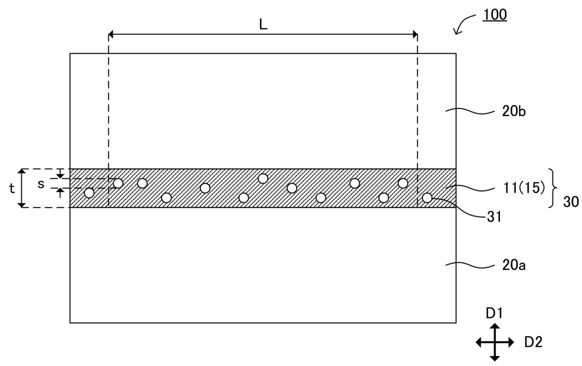


EP 4 744 884 A1

## Description

### Technical Field

The present disclosure relates to a product and a method for producing the same, and a foaming adhesive sheet and an adhesive composition used therefor.

### Background Art

Adhesives that adhere members to each other is used in various fields, and a lot of methods for adhering thereof have been known.

For example, Patent Documents 1 to 3 disclose an adhesive sheet including a foaming agent (foaming adhesive sheet). As a method for using a forming adhesive sheet, for example, a method wherein members are adhered to each other by disposing a foaming adhesive sheet between the members, and then, forming and curing the foaming adhesive sheet by heating, has been known.

In such a foaming adhesive sheet, the adhesiveness after foamed and cured is desired to be excellent.

### Citation List

### Patent Documents

Patent Document 1: Japanese Patent Application Laid-Open (JP-A) No. 2000-53944
Patent Document 2: Japanese Patent No. 6223477
Patent Document 3: JP-A No. 2019-214729

### Summary of Disclosure

### Technical Problem

The present disclosure has been made in view of the above circumstances, and a main object thereof is to provide a product having excellent adhesiveness, a method for producing a product, foaming adhesive sheet and adhesive composition capable of improving adhesiveness.

### Solution to Problem

One embodiment of the present disclosure provides a product comprising a first member, a second member and an adhesive member disposed between the first member and the second member, wherein the adhesive member includes at least a cured adhesive layer; the cured adhesive layer is a foam layer including a foamed and cured product of an adhesive composition including a curable adhesive and a foaming agent; the curable adhesive is a thermosetting adhesive, and the foaming agent is a thermally expandable microcapsule; and in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

Another embodiment of the present disclosure provides a product comprising a first member, a second member and an adhesive member disposed between the first member and the second member, wherein the adhesive member includes at least a cured adhesive layer; the cured adhesive layer is a foam layer including a foamed and cured product of an adhesive composition including a curable adhesive and a foaming agent; the curable adhesive is a thermosetting adhesive, and the foaming agent is a thermally expandable microcapsule; and in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

Another embodiment of the present disclosure provides a method for producing a product using a foaming adhesive sheet including at least an adhesive layer, wherein the adhesive layer is a foaming agent-including adhesive layer including a curable adhesive and a foaming agent; the curable adhesive is a thermosetting adhesive, and the foaming agent is a thermally expandable microcapsule; the method comprising a disposing step of disposing the foaming adhesive sheet between a first member and a second member; the method comprising an adhering step of foaming and curing the foaming agent-including adhesive layer of the foaming adhesive sheet to form a foam layer, and adhering the first member

and the second member; and foaming and curing conditions in the adhering step are set so that, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

Another embodiment of the present disclosure provides a method for producing a product using a foaming adhesive sheet including at least an adhesive layer, wherein the adhesive layer is a foaming agent-including adhesive layer including a curable adhesive and a foaming agent; the curable adhesive is a thermosetting adhesive, and the foaming agent is a thermally expandable microcapsule; the method comprising a disposing step of disposing the foaming adhesive sheet between a first member and a second member; the method comprising an adhering step of foaming and curing the foaming agent-including adhesive layer of the foaming adhesive sheet to form a foam layer, and adhering the first member and the second member; and foaming and curing conditions in the adhering step are set so that, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

Another embodiment of the present disclosure provides a foaming adhesive sheet comprising at least an adhesive layer, wherein the adhesive layer is a foaming agent-including adhesive layer including a curable adhesive and a foaming agent; the curable adhesive is a thermosetting adhesive, and the foaming agent is a thermally expandable microcapsule; and when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

Another embodiment of the present disclosure provides a foaming adhesive sheet comprising at least an adhesive layer, wherein the adhesive layer is a foaming agent-including adhesive layer including a curable adhesive and a foaming agent; the curable adhesive is a thermosetting adhesive, and the foaming agent is a thermally expandable microcapsule; and when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

Another embodiment of the present disclosure provides an adhesive composition comprising a curable adhesive and a foaming agent, wherein the curable adhesive is a thermosetting adhesive, and the foaming agent is a thermally expandable microcapsule; and when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

Another embodiment of the present disclosure provides an adhesive composition comprising a curable adhesive and a foaming agent, wherein the curable adhesive is a thermosetting adhesive, and the foaming agent is a thermally expandable microcapsule; and when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

## Advantageous Effects of Disclosure

The present disclosure is able to provide a product having excellent adhesiveness and a method for producing a product, foaming adhesive sheet and adhesive composition capable of improving adhesiveness.

## Brief Description of Drawings

[FIG. 1] is a schematic cross-sectional view exemplifying a product in the present disclosure.
[FIG. 2] is a schematic cross-sectional view exemplifying a product in the present disclosure.

[FIG. 3] is a schematic cross-sectional view exemplifying a product in the present disclosure.
[FIG. 4] is a schematic cross-sectional view exemplifying a product in the present disclosure.
[FIGS. 5] are process drawings exemplifying a method for producing a product in the present disclosure.
[FIGS. 6] are process drawings exemplifying a method for producing a product in the present disclosure.
[FIG. 7] is a schematic cross-sectional view exemplifying a foaming adhesive sheet in the present disclosure.
[FIG. 8] is a schematic cross-sectional view exemplifying a foaming adhesive sheet in the present disclosure.
[FIG. 9] is a schematic cross-sectional view exemplifying a foaming adhesive sheet in the present disclosure.
[FIG. 10] is a schematic cross-sectional view exemplifying a foaming adhesive sheet in the present disclosure.
[FIG. 11] is a graph exemplifying a TMA curve for a foaming adhesive sheet.
[FIG. 12] is a schematic cross-sectional view exemplifying a foamed and cured state of the foaming adhesive sheet in the present disclosure.
[FIG. 13] is a schematic cross-sectional view exemplifying a foamed and cured state of the foaming adhesive sheet in the present disclosure.
[FIG. 14] is a schematic cross-sectional view explaining a method for testing an adhesiveness of the foamed and cured foaming adhesive sheet.

Description of Embodiments

Embodiments in the present disclosure are hereinafter explained with reference to, for example, drawings. However, the present disclosure is implemented in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present descriptions and each drawing, for the factor same as that described in the figure already explained, the same reference sign is indicated and the detailed explanation thereof may be omitted.

In the present descriptions, in expressing an aspect wherein some member is disposed on the other member, when described as merely "on" or "below", unless otherwise stated, it includes both of the following cases: a case wherein some member is disposed directly on or directly below the other member so as to be in contact with the other member, and a case wherein some member is disposed on the upper side or the lower side of the other member via yet another member. Also, in the present descriptions, on the occasion of expressing an aspect wherein some member is disposed on the surface of the other member, when described as merely "on the surface side" or "on the surface", unless otherwise stated, it includes both of the following cases: a case wherein some member is disposed directly on or directly below the other member so as to be in contact with the other member, and a case wherein some member is disposed on the upper side or the lower side of the other member via yet another member.

Also, in the present descriptions, a member referred to as "film" is included in "sheet". Also, a member referred to as "sheet" is included in "film". Also, number range in the present descriptions is a range of an average value.

In the thermally expandable microcapsule, a thermal expansion agent such as hydrocarbon is included inside a shell formed from resin. In a thermally expandable microcapsule, when heated, the resin constituting the shell softens and the pressure of the thermal expansion agent such as hydrocarbon increases, so that the thermally expandable microcapsule expands. Since the shell becomes thinner due to the expansion, when it is further heated, the thermal expansion agent escapes from the thermally expandable microcapsule, causing the thermally expandable microcapsule to shrink. The inventors of the present disclosure found out that the thermally expandable agent (gas) escaping from the thermally expandable microcapsule becomes a bubble, and these bubbles may gather to be a large bubble. Further, the inventors of the present disclosure also found out that, during the production of a product, when adhering the foaming adhesive sheet to the first member or second member, bubbles may be mixed between the first member or second member and the foaming adhesive sheet so that these bubbles may gather to form large bubbles.

Also, in the case of the thermosetting adhesive, the resin component of the thermosetting adhesive softens and increases its fluidity in the process of foaming and curing of the adhesive composition. The inventors of the present disclosure also found out that, if there are bubbles in the layer, when the resin component of the thermosetting adhesive softens and increases its fluidity, the bubbles may move more easily and gather into large bubbles.

In this way, the inventors of the present disclosure found out a new problem that, when the curable adhesive is a thermosetting adhesive and the foaming agent is a thermally expandable microcapsule, large bubbles may be generated, and such large bubbles may cause the deterioration of adhesion. The present disclosure is to solve such new problem.

The product, method for producing a product, foaming adhesive sheet and adhesive composition in the present disclosure are hereinafter described in detail.

A. Product

The product in the present disclosure includes two embodiments. Each embodiment is hereinafter described.

I. First embodiment of product

The first embodiment of the product in the present disclosure is a product comprising a first member, a second member and an adhesive member disposed between the first member and the second member, wherein the adhesive member includes at least a cured adhesive layer; the cured adhesive layer is a foam layer including a foamed and cured product of an adhesive composition including a curable adhesive and a foaming agent; the curable adhesive is a thermosetting adhesive, and the foaming agent is a thermally expandable microcapsule; and in a cross-sectional surface parallel to a thickness direction of the foam layer, number of bubbles, having a length, in the thickness direction of the foam layer, of more than or equal to a value obtained by subtracting 6 $\mu$m from the thickness of the foam layer, is less than 7 per 4 mm length in a direction perpendicular to the thickness direction of the foam layer.

FIG. 1 is a schematic cross-sectional view exemplifying a product in the present embodiment. As shown in FIG. 1, the product 100 comprises a first member 20a, a second member 20b and an adhesive member 30 disposed between the first member 20a and the second member 20b. The adhesive member 30 includes a cured adhesive layer 11. The cured adhesive layer 11 is a foam layer 15 including a foamed and cured product of an adhesive composition including a curable adhesive and a foaming agent, and it includes a bubble 31 inside. The curable adhesive is a thermosetting adhesive, and the foaming agent is a thermally expandable microcapsule. In a cross-sectional surface parallel to a thickness direction D1 of the foam layer 15 constituting the cured adhesive layer 11, among the bubbles 31, the number of bubbles 31 having a length "s", in the thickness direction D1 of the foam layer 15, in a predetermined range with respect to the thickness "t" of the foam layer 15, is a predetermined value or less per a predetermined length "L" in a direction d2 perpendicular to the thickness direction d1 of the foam layer 15.

When the adhesive member includes one cured adhesive layer, and when the cured adhesive layer is the foam layer, if large bubbles whose size is approximately the thickness of the foam layer exist, in the region including such bubbles, the cured adhesive layer may not be in contact with the first member and second member; or the contacting area between the cured adhesive layer and the first member and the contacting area between the cured adhesive layer and the second member may be extremely small. Therefore, it is believed that adhesion defects such as peeling, floating, or cracking of the cured adhesive layer is likely to occur, starting from the bubbles.

Meanwhile, in the product in the present embodiment, when the adhesive member includes one cured adhesive layer, and when the cured adhesive layer is the foam layer, the adhesion defect can be suppressed since, in a cross-sectional surface parallel to a thickness direction of the foam layer, number of bubbles having a length, in the thickness direction of the foam layer, in a predetermined range with respect to the thickness of the foam layer, is a predetermined value or less per a predetermined length in a direction perpendicular to the thickness direction of the foam layer. Therefore, the adhesiveness may be improved.

FIG. 2 is a schematic cross-sectional view showing another example of a product in the present embodiment. As shown in FIG. 2, in the product in the present embodiment, the adhesive member 30 may include a first cured adhesive layer 11a and a second cured adhesive layer 11b. The first cured adhesive layer 11a and second cured adhesive layer 11b are respectively foam layers 15a, 15b including a foamed and cured product of an adhesive composition including a curable adhesive and a foaming agent, and it includes a bubble 31 inside. In a cross-sectional surface in the thickness direction D1 of the foam layer 15a constituting the first cured adhesive layer 11a, among the bubbles 31, the number of bubbles having a length "s", in the thickness direction D1 of the foam layer 15a, in a predetermined range with respect to the thickness t1 of the foam layer 15a, is a predetermined value or less per a predetermined length "L" in a direction D2 perpendicular to the thickness direction D1 of the foam layer 15a. Also, in a cross-sectional surface in the thickness direction D1 of the foam layer 15b constituting the second cured adhesive layer 11b, among the bubbles 31, the number of bubbles having a length "s", in the thickness direction D1 of the foam layer 15b, in a predetermined range with respect to the thickness t2 of the foam layer 15b, is a predetermined value or less per a predetermined length "L" in a direction D2 perpendicular to the thickness direction D1 of the foam layer 15b.

Incidentally, in FIG. 2, although both the first cured adhesive layer 11a and the second cured adhesive layer 11b are foam layers 15a, 15b including a foamed and cured product of an adhesive composition including a curable adhesive and a foaming agent, only either one of the first cured adhesive layer 11a and the second cured adhesive layer 11b may be the foam layer including a foamed and cured product of an adhesive composition including a curable adhesive and a foaming agent.

When the adhesive member includes the first cured adhesive layer and second cured adhesive layer, and when the first cured adhesive layer and second cured adhesive layer are foam layers, if large bubbles whose size is approximately the thickness of the foam layer exist, in the region including such bubbles, the first cured adhesive layer may not be in contact with the first member; the second cured adhesive layer may not be in contact with the second

member; the contacting area between the first cured adhesive layer and the first member may be extremely small; or the contacting area between the second cured adhesive layer and the second member may be extremely small. Therefore, it is believed that adhesion defects such as peeling, floating, or cracking of the first cured adhesive layer or second cured adhesive layer is likely to occur, starting from the bubbles.

Meanwhile, in the product in the present embodiment, when the adhesive member includes the first cured adhesive layer and second cured adhesive layer, and when the first cured adhesive layer and second cured adhesive layer are foam layers, the adhesion defect can be suppressed since, in a cross-sectional surface parallel to a thickness direction of the foam layer, the number of bubbles having a length, in the thickness direction of the foam layer, in a predetermined range with respect to the thickness of the foam layer, is a predetermined value or less per a predetermined length in a direction perpendicular to the thickness direction of the foam layer. Therefore, the adhesiveness may be improved.

Incidentally, when the adhesive member includes the first cured adhesive layer and second cured adhesive layer, and when either one of the first cured adhesive layer and second cured adhesive layer is the foam layer, the adhesion defect can be similarly suppressed, and the adhesiveness can be improved.

FIG. 3 is a schematic cross-sectional view showing another example of a product in the present embodiment. As shown in FIG. 3, in the product in the present embodiment, the adhesive member 30 may include the first cured adhesive layer 11a, a substrate 12 and the second cured adhesive layer 11b, in this order. Incidentally, FIG. 3 is similar to FIG. 2 described above, except that the substrate 12 is disposed between the first cured adhesive layer 11a and the second cured adhesive layer 11b.

Incidentally, in FIG. 3, although both the first cured adhesive layer 11a and the second cured adhesive layer 11b are foam layers 15a, 15b including a foamed and cured product of an adhesive composition including a curable adhesive and a foaming agent, only either one of the first cured adhesive layer 11a and the second cured adhesive layer 11b may be the foam layer including a foamed and cured product of an adhesive composition including a curable adhesive and a foaming agent.

When the adhesive member includes the first cured adhesive layer, the substrate and second cured adhesive layer in this order, and the first cured adhesive layer and second cured adhesive layer are foam layers, when large bubbles whose size is approximately the thickness of the foam layer exist, in the region including such bubbles, the first cured adhesive layer may not be in contact with the first member and substrate; the second cured adhesive layer may not be in contact with the second member and substrate; the contacting area between the first cured adhesive layer and the first member and substrate may be extremely small; or the contacting area between the second cured adhesive layer and the second member and substrate may be extremely small. Therefore, it is believed that adhesion defects such as peeling, floating, or cracking of the first cured adhesive layer or second cured adhesive layer is likely to occur, starting from the bubbles.

Meanwhile, in the product in the present embodiment, when the adhesive member includes the first cured adhesive layer, substrate and second cured adhesive layer in this order, and when the first cured adhesive layer and second cured adhesive layer are foam layers, the adhesion defect can be suppressed since, in a cross-sectional surface parallel to a thickness direction of the foam layer, the number of bubbles having a length, in the thickness direction of the foam layer, in a predetermined range with respect to the thickness of the foam layer, is a predetermined value or less per a predetermined length in a direction perpendicular to the thickness direction of the foam layer. Therefore, the adhesiveness may be improved.

Incidentally, when the adhesive member includes the first cured adhesive layer, substrate and second cured adhesive layer, and when either one of the first cured adhesive layer and second cured adhesive layer is the foam layer, the adhesion defect can be similarly suppressed, and the adhesiveness can be improved.

Therefore, in the product in the present embodiment, the trustability and durability can be improved.

Each constitution of the product in the present embodiment is hereinafter described.

## 1. Adhesive member

The adhesive member in the present disclosure is disposed between a first member and a second member, and includes at least a cured adhesive layer. Also, the cured adhesive layer is a foam layer including a foamed and cured product of an adhesive composition including a curable adhesive and a foaming agent, and in a cross-sectional surface parallel to a thickness direction of the foam layer, the number of bubbles having a length, in the thickness direction of the foam layer, in a predetermined range with respect to the thickness of the foam layer, is a predetermined value or less per a predetermined length in a direction perpendicular to the thickness direction of the foam layer.

Also, the adhesive member has only to include at least a cured adhesive layer, and for example, the adhesive member may include one cured adhesive layer; may include a first cured adhesive layer and a second cured adhesive layer; and may include a first cured adhesive layer, a substrate and a second cured adhesive layer, in this order.

When the adhesive member includes the first cured adhesive layer and second cured adhesive layer, or when the adhesive member includes the first cured adhesive layer, substrate and second cured adhesive layer in this order, at least

one of the first cured adhesive layer and second cured adhesive layer is the foam layer.

Incidentally, in the present specification, for convenience, the cured adhesive layer located on the first member side in the adhesive member is referred to as the first cured adhesive layer, and the cured adhesive layer located on the second member side in the adhesive member is referred to as the second cured adhesive layer.

Each constitution of the adhesive member is hereinafter described.

(1) Cured adhesive layer

The cured adhesive layer in the present embodiment is a foam layer including a foamed and cured product of an adhesive composition including a curable adhesive and a foaming agent, and in a cross-sectional surface parallel to a thickness direction of the foam layer, the number of bubbles having a length, in the thickness direction of the foam layer, in a predetermined range with respect to the thickness of the foam layer, is a predetermined value or less per a predetermined length in a direction perpendicular to the thickness direction of the foam layer.

(a) Bubble

The cured adhesive layer in the present embodiment is a foam layer including a foamed and cured product of an adhesive composition including a curable adhesive and a foaming agent, and it includes a bubble inside. In a cross-sectional surface parallel to a thickness direction of the foam layer, the number of bubbles having a length, in the thickness direction of the foam layer, of more than or equal to a value obtained by subtracting 6 μm from the thickness of the foam layer, is less than 7 per 4 mm length in a direction perpendicular to the thickness direction of the foam layer. Among them, the number of the bubbles is preferably 3 or less, more preferably 2 or less, further preferably 1 or less, and particularly preferably 0.

Incidentally, "bubbles having a length, in the thickness direction of the foam layer, of more than or equal to a value obtained by subtracting 6 μm from the thickness of the foam layer", refers to the bubbles wherein the length of the bubble, in the thickness direction of the foam layer, is more than or equal to a value obtained by subtracting 6 μm from the thickness of the foam layer. For example, when the thickness of the foam layer is 200 μm, the number of bubbles wherein the length of the bubble, in the thickness direction of the foam layer, is 200 - 6 = 194 (μm) or more is in the above range. Also, for example, when the thickness of the foam layer is 300 μm, the number of bubbles wherein the length of the bubble, in the thickness direction of the foam layer, is 300 - 6 = 294 (μm) or more is in the above range.

Here, the length of the bubbles in the thickness direction of the foam layer, in the cross-sectional surface parallel to the thickness direction of the foam layer, and the number of the bubbles can be determined, for example, from an image obtained by optical microscopy or scanning electron microscopy (SEM) observation; or determined from a tomograph obtained by X-ray CT scans. In the X-ray CT scan, the bubbles in the cross-sectional surface of the foam layer can be observed, in a non-destructive, and a non-contact manner. Therefore, when cutting the product to expose the cross-sectional surface of the foam layer, the bubbles can be prevented from being crushing. Therefore, the length of the bubbles in the thickness direction of the foam layer and the number of bubbles can be accurately determined. In particular, for example, when the first member and second member are metal members, an optical microscopy or a scanning electron microscopy (SEM) observation is preferable.

Also, the number of bubbles in the cross-sectional surface parallel to the thickness direction of the foam layer is the average value of the number of bubbles at 3 randomly selected locations.

Also, the thickness of the foam layer is a value measured from a cross-section in the thickness direction of the foaming adhesive sheet observed with a transmission electron microscope (TEM), a scanning electron microscope (SEM), or a scanning transmission type electron microscope (STEM), and is an average value of the thickness at 10 locations selected at random. Incidentally, the same is applied to the method for measuring the thickness of each layer.

Also, for the product, the thickness direction of the foam layer is the direction perpendicular to the flat surface direction of the first member or the second member. Also, the direction perpendicular to the thickness direction of the foam layer is the flat surface direction of the first member or the second member. Incidentally, the flat surface direction of the first member and the second member is the flat surface direction of the first member and the second member when taking a broad view thereof.

In the foam layer, examples of the method for suppressing bubbles having a length in the thickness direction of the foam layer in the predetermined range may include a method wherein the composition of the adhesive composition is adjusted; and a method wherein the foaming and curing conditions of the adhesive composition are adjusted.

Examples of the method for adjusting the composition of the adhesive composition may include a method wherein the flowability of the resin component of the curable adhesive is adjusted; a method wherein the maximum foaming temperature of the curing agent is adjusted; a method wherein the foaming ratio of the foaming agent at the maximum foaming temperature is adjusted; a method wherein the content of the curing agent is adjusted; and when the foaming agent is a thermally expandable microcapsule, a method wherein the structure of the thermally expandable

microcapsule is adjusted.

Examples of the method for adjusting the flowability of the resin component of the curable adhesive may include a method wherein the molecular weight of the resin component which is a main component of the curable adhesive is adjusted; a method wherein the conditions of the resin component which is a main component of the curable adhesive is adjusted; and a method wherein the content of the resin component that is liquid at ordinary temperature is adjusted.

In the method for adjusting the molecular weight of the resin component which is a main component of the curable adhesive, for example, thermosetting adhesives are used as the curable adhesive. In this case, the flowability of the resin component is increased by being softened in the foaming and curing process of the adhesive composition. At this time, when the molecular weight of the resin component is high, the fluidity of the resin component is low, compared to the case wherein the molecular weight of the resin component is low. As a result, the occurrence of large bubbles described above tend to be suppressed since it is difficult for bubbles to grow large or to connect with each other. Therefore, the occurrence of large bubbles described above can be suppressed by including the high molecular weight resin component as the resin component which is a main component of the curable adhesive.

As described above, in the case of the thermosetting adhesive, the resin component softens and increases its fluidity in the foaming and curing process of the adhesive composition. The fluidity of the resin component that is solid at ordinary temperature tends to be low, compared to the resin component that is liquid at ordinary temperature. As a result, the occurrence of large bubbles described above tends to be suppressed since it is difficult for bubbles to grow large or to connect with each other. Therefore, in the method for adjusting the conditions of the resin component which is a main component of the curable adhesive, the occurrence of large bubbles described above can be suppressed by including the resin component that is solid at ordinary temperature, as the resin component which is a main component of the curable adhesive. Incidentally, the ordinary temperature is 23°C.

When the curable adhesive includes the resin component that is liquid at ordinary temperature as the resin component which is a main component of the curable adhesive, the flowability of the resin component when the resin component is softened, in the foaming and curing process of the adhesive composition, tends to be high. Meanwhile, the flowability of the resin component can be made relatively low by making the content of the resin component, that is liquid at ordinary temperature, relatively low. Therefore, the occurrence of large bubbles described above can be suppressed by decreasing the content of the resin component that is liquid at ordinary temperature, among the resin component which is a main component of the curable adhesive.

In the method for adjusting the maximum foaming temperature of the foaming agent, a thermally expandable microcapsule is used as the foaming agent. In the thermally expandable microcapsule, a thermal expansion agent such as hydrocarbon is included inside of a shell formed from resin. Here, in a thermally expandable microcapsule, when heated, the resin constituting the shell softens and the pressure of the thermal expansion agent such as hydrocarbon increases, so that the thermally expandable microcapsule expands. Since the shell becomes thinner due to the expansion, when further heated, the thermal expansion agent escapes from the thermally expandable microcapsule, causing the thermally expandable microcapsule to shrink. Therefore, for example, when the maximum foaming temperature of the foaming agent is high, the foaming agent can be prevented from shrinking in the foaming and curing process of the adhesive composition and the foam layer (cured adhesive layer) can be prevented from being thinned. This can prevent the size of the bubbles from getting larger relative to the thickness of the foam layer (cured adhesive layer). Therefore, since the size of the bubble can be relatively small with respect to the thickness of the foam layer (cured adhesive layer), large bubbles described above can be suppressed.

In the method for adjusting the foaming ratio of the foaming agent at the maximum foaming temperature, for example, when the foaming ratio of the foaming agent at the maximum foaming temperature is high, the thickness of the foam layer (cured adhesive layer) tends to be thick. Therefore, the size of the bubble can be made relatively small with respect to the thickness of the foam layer (cured adhesive layer). Therefore, large bubbles described above can be suppressed.

In the method for adjusting the content of the foaming agent, for example, when the content of the foaming agent is high, the thickness of the foam layer (cured adhesive layer) tends to be thick. Therefore, the size of the bubble can be made relatively small with respect to the thickness of the foam layer (cured adhesive layer). Therefore, large bubbles described above can be suppressed.

In the method for adjusting the structure of a thermally expandable microcapsule, when the foaming agent is a thermally expandable microcapsule, and, for example, when the thickness of the shell of the thermally expandable microcapsule is thick, the gas permeability tends to decrease and the size of the bubbles tends to decrease. Also, for example, when the shell of the thermally expandable microcapsule is cross-linked, the gas permeability tends to decrease and the size of the bubbles tends to decrease.

Examples of the method for adjusting the foaming and curing conditions of the adhesive composition, when the foaming agent is the thermally expandable microcapsule, may include a method wherein the heating temperature is adjusted. For example, by making the heating temperature in a predetermined range with respect to the maximum foaming temperature of the foaming agent, the generation of large bubbles as described above can be suppressed. Also, for

example, by making the heating temperature in a predetermined range with respect to the maximum displacement extrapolation temperature of the foaming adhesive sheet, large bubbles as described above can be suppressed. The specific heating temperature will be described in the section "B. Method for producing product" below.

(b) Material of cured adhesive layer

The cured adhesive layer in the present embodiment includes a foamed and cured product of an adhesive composition including a curable adhesive and a foaming agent.

(i) Curable adhesive

As the curable adhesive used for the cured adhesive layer in the present embodiment, a curable adhesive commonly used for an adhesive layer of a foaming adhesive sheet may be used. Examples of the curable adhesive may include thermosetting adhesives and light curable adhesives. Among them, the thermosetting adhesive is preferable. The thermosetting adhesive may be applied even when the first member and the second member are not transparent, such as a metal member.

Also, examples of the curable adhesive may include epoxy resin based adhesives, acrylic resin based adhesives, phenolic resin based adhesives, unsaturated polyester resin based adhesives, alkyd resin based adhesives, urethane resin based adhesives and thermosetting polyimide resin based adhesives.

Among them, the curable adhesive is preferably an epoxy resin based adhesive. That is, the curable adhesive preferably includes an epoxy resin and a curing agent. The epoxy resin based adhesive is usually excellent in mechanical strength, heat resistance, insulating property and chemical resistance, curing shrinkage is small, so that it may be used in a wide variety of applications.

A case wherein the curable adhesive is an epoxy resin based adhesive is hereinafter explained referring to examples.

(i-1) Epoxy resin

The epoxy resin in the present embodiment is a compound including at least one or more epoxy group or glycidyl group, and cured by causing a cross-linking polymerization reaction by being used in combination with a curing agent. The epoxy resin also includes a monomer including at least one or more epoxy group or glycidyl group.

Epoxy resins generally used as epoxy resin based adhesives may be used as the epoxy resin.

Among them, the curable adhesive preferably includes an epoxy resin having the weight-average molecular weight of 900 or more and 100,000 or less, as the epoxy resin. As described above, in the foaming and curing process of the adhesive composition, the epoxy resin softens and increases its fluidity. At this time, when the molecular weight of the epoxy resin is high, the fluidity of the epoxy resin is low compared to the case when the molecular weight of the epoxy resin is low. As a result, the occurrence of large bubbles tends to be suppressed since it is difficult for bubbles to grow large or to connect with each other. Therefore, when high molecular weight epoxy resin is included, the generation of large bubbles can be suppressed.

In this case, the weight-average molecular weight of the epoxy resin is, for example, 900 or more and 100,000 or less, may be 1650 or more and 80,000 or less, and may be 3800 or more and 60,000 or less.

Incidentally, the weight-average molecular weight of the resin component is a value in terms of polystyrene when measured with a gel permeation chromatography (GPC).

Also, as the epoxy resin, the curable adhesive preferably includes an epoxy resin that is solid at ordinary temperature. As described above, in the foaming and curing process of the adhesive composition, the epoxy resin softens and increases its fluidity. At this time, the fluidity of the epoxy resin that is solid at ordinary temperature tends to be low, compared to the epoxy resin that is liquid at ordinary temperature. As a result, the occurrence of large bubbles tends to be suppressed since it is difficult for bubbles to grow large or to connect with each other. Therefore, the presence of the epoxy resin that is solid at ordinary temperature can suppress the occurrence of large bubbles.

Also, as the epoxy resin, the curable adhesive preferably includes the epoxy resin that is solid at ordinary temperature and the epoxy resin that is liquid at ordinary temperature. When the curable adhesive includes the epoxy resin that is liquid at ordinary temperature, the flowability when the resin component is softened tends to be high in the foaming and curing process of the adhesive composition. As a result, it is easier for bubbles to connect with each other, and the bubbles tend to grow larger. Therefore, the product in the present embodiment is useful when the curable adhesive includes the epoxy resin that is liquid at ordinary temperature. When the adhesive member includes the first cured adhesive layer and second cured adhesive layer, at least one of the adhesive compositions used for the first cured adhesive layer and second cured adhesive layer preferably includes the epoxy resin that is liquid at ordinary temperature, and it is further preferable that only one thereof includes the epoxy resin that is liquid at ordinary temperature. As described

above, the product in the present embodiment is useful in such cases.

The content of the epoxy resin that is liquid at ordinary temperature in the adhesive composition is preferably 60 parts by mass or less, more preferably 55 parts by mass or less, and further preferably 50 parts by mass or less, with respect to 100 parts by mass of the resin components in the adhesive composition. When the curable adhesive includes the epoxy resin that is liquid at ordinary temperature, although the flowability of the resin component tends to be high in the foaming and curing process of the adhesive composition, the flowability of the resin component can be made relatively low by making the content of the epoxy resin, that is liquid at ordinary temperature, relatively low. Therefore, when the content of the epoxy resin that is liquid at ordinary temperature is in the above range, the occurrence of large bubbles can be suppressed. Meanwhile, the content of the epoxy resin that is liquid at ordinary temperature in the adhesive composition may be, for example, 5 parts by mass or more, and may be 10 parts by mass or more, with respect to 100 parts by mass of the resin components in the adhesive composition. Incidentally, when the epoxy resin that is liquid at ordinary temperature is an optional component, the lower limit of the content of the epoxy resin that is liquid at ordinary temperature in the adhesive composition is not particularly limited.

For the epoxy resin based adhesive, the resin component in the adhesive composition refers to epoxy resins and acrylic resins. Optional components such as urethane resins are also included in the resin components in the adhesive composition. Also, when the curing agent is a phenolic resin, the curing agents such as phenolic resins are also included in the resin component in the adhesive composition.

Also, as the epoxy resin, the curable adhesive preferably includes a first epoxy resin with softening temperature of 50°C or more and an epoxy equivalent of 5000 g/eq or less, and a second epoxy resin with softening temperature higher than the first epoxy resin and a weight-average molecular weight of 20,000 or more. By using the first epoxy resin and the second epoxy resin in combination, the pressure-sensitive adhesiveness (tack property) of the adhesive layer including the adhesive composition may be decreased, and the sliding property can be improved. Further, the blocking resistance and adhesiveness after foamed and cured can be improved.

When attempting only an improvement in adhesiveness after foamed and cured, for example, it is effective to use an epoxy resin with a lower molecular weight (low epoxy equivalent) than an epoxy resin with a high molecular weight (high epoxy equivalent). However, when the epoxy resin with a low molecular weight (low epoxy equivalent) is used, the blocking easily occurs.

In contrast to this, if a first epoxy resin with relatively low softening temperature (relatively high crystallinity) and a low molecular weight (low epoxy equivalent) is used, when the temperature is higher than the softening temperature, the first epoxy resin is rapidly melted to be a liquid with a low viscosity. Therefore, it is easy to improve the adhesiveness after foamed and cured. Meanwhile, since the first epoxy resin is relatively high in crystallinity, the blocking can be suppressed from occurring, compared to an epoxy resin with relatively low crystallinity or an epoxy resin with no crystallinity. However, when only the first epoxy resin is used, there is a possibility that the blocking suppressing effect is not sufficient, or that the pressure-sensitive adhesiveness (tack property) of the adhesive layer including the adhesive composition is too high. Therefore, by further using the second epoxy resin with relatively high softening temperature (with relatively low crystallinity) and high molecular weight, the blocking suppressing effect can be improved, and the pressure-sensitive adhesiveness (tack property) of the adhesive layer including the adhesive composition can be suppressed at low level.

(i-1-1) First epoxy resin

The first epoxy resin has softening temperature of 50°C or more, and an epoxy equivalent of 5000 g/eq or less. The first epoxy resin has relatively low softening temperature (relatively high crystallinity) as compared with the second epoxy resin to be described later. Since the first epoxy resin has relatively high crystallinity and low molecular weight, it is easy to improve the adhesiveness after foamed and cured and the blocking resistance. Also, since the first epoxy resin has a low molecular weight, a cross-linking density may be increased so that an adhesive layer having good mechanical strength, chemical resistance, and curability may be obtained. Also, it is preferable that the first epoxy resin is an epoxy resin that is solid at ordinary temperature (23°C).

The softening temperature of the first epoxy resin is usually 50°C or more, may be 55°C or more, and may be 60°C or more. Meanwhile, the softening temperature of the first epoxy resin is, for example, 150°C or less. The softening temperature is measured by a ring and ball method according to JIS K7234:1986.

The epoxy equivalent of the first epoxy resin is, for example, 5000 g/eq or less, may be 3000 g/eq or less, may be 1000 g/eq or less, and may be 600 g/eq or less. Meanwhile, the epoxy equivalent of the first epoxy resin is, for example, 90 g/eq or more, may be 100 g/eq or more, and may be 110 g/eq or more. Epoxy equivalent is the number of grams of the resin including an epoxy group of 1 gram-equivalent. The epoxy equivalent is measured by a method according to JIS K7236:2009 corresponding to ISO 3001 (Plastics-Epoxy compounds-Determination of epoxy equivalent).

The first epoxy resin may be a monofunctional epoxy resin, may be a bifunctional epoxy resin, may be a trifunctional epoxy resin, and may be an epoxy resin of a tetrafunctional or more.

Also, the weight-average molecular weight (Mw) of the first epoxy resin is usually lower than the weight-average

molecular weight (Mw) of the second epoxy resin to be described later. Mw of the first epoxy resin is, for example 6,000 or less, may be 4,000 or less, and may be 3,000 or less. Meanwhile, Mw of first epoxy resin is, for example, 400 or more.

The melt viscosity at 150°C of the first epoxy resin is, for example, 0.005 Pa•s or more, may be 0.015 Pa•s or more, may be 0.03 Pa•s or more, may be 0.05 Pa•s or more, and may be 0.1 Pa•s or more. When the melt viscosity is too low, preferable foaming property may not be obtained. Also, when the melt viscosity of the first epoxy resin is too low (when the crystallinity of the first epoxy resin is too high), the pressure-sensitive adhesiveness (tack property) of the adhesive layer including the adhesive composition may be high. The reason therefor is presumed that, when the melt viscosity of the first epoxy resin is too low (when the crystallinity of first epoxy resin is too high), the crystallinity thereof greatly decreases when it is compatibilized with the second epoxy resin or the acrylic resin so that Tg of the adhesive layer is decreased. Meanwhile, the melt viscosity at 150°C of the first epoxy resin is, for example, 10 Pa•s or less, may be 5 Pa•s or less, and may be 2 Pa•s or less. When the melt viscosity is too high, the uniformity of the adhesive layer including the adhesive composition may be decreased. The melt viscosity is measured with a Brookfield type single cylinder rotary viscosimeter and a thermocell for heating a solution, according to JIS K6862:1984 corresponding to ISO 2555 (Resins in the liquid state or as emulsions or dispersions-Determination of Brookfield RV viscosity).

Then, a configuration of the first epoxy resin will be described. Examples of the first epoxy resin may include aromatic based epoxy resins, aliphatic based epoxy resins, alicyclic epoxy resins, and heterocyclic based epoxy resins. Specific examples of the first epoxy resin may include bisphenol type epoxy resins such as bisphenol A type epoxy resins and bisphenol F type epoxy resins; novolac type epoxy resins such as bisphenol A novolac type epoxy resins and cresol novolac type epoxy resins; and modified epoxy resins such as urethane modified epoxy resins and rubber modified epoxy resins. Further, other specific examples may include biphenyl type epoxy resins, stilbene type epoxy resins, triphenol methane type epoxy resins, alkyl-modified triphenol methane type epoxy resins, triazine nucleus-including epoxy resins, dicyclopentadienemodified phenol type epoxy resins, naphthalene type epoxy resins, glycol type epoxy resins, and pentaerythritol type epoxy resins. The first epoxy resin may be one kind, and may be two kinds or more.

The bisphenol A type epoxy resin may be present in a liquid state at ordinary temperature or in a solid state at ordinary temperature according to the number of repeating units of the bisphenol skeleton. The bisphenol A type epoxy resin wherein the bisphenol skeleton of the main chain is, for example, 2 or more and 10 or less is solid at ordinary temperature. In particular, the bisphenol A type epoxy resin is preferable in that heat resistance may be improved.

Particularly, the first epoxy resin is preferably a bisphenol A novolac type epoxy resin represented by the following general formula (1).

[Chemical formula 1]

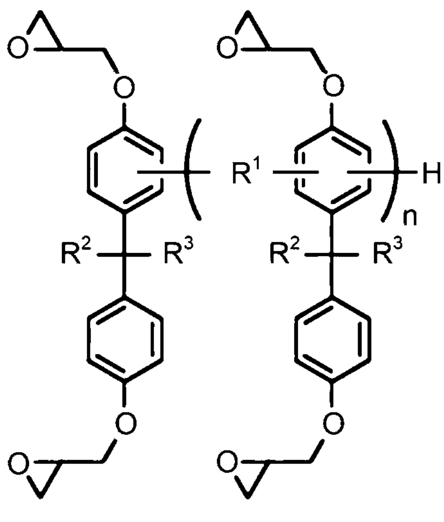

General formula (1)

In general formula (1), $R^1$ is a group represented by $C_mH_{2m}$ ("m" is 1 or more and 3 or less), $R^2$ and $R^3$ are respectively and independently a group represented by $C_pH_{2p+1}$ ("p" is 1 or more and 3 or less), and "n" is 0 or more and 10 or less.

In general formula (1), "m" in $R^1$ is preferably 1, that is, $R^1$ is preferably $-CH_2-$. Similarly, "p" in $R^2$ and $R^3$ is preferably 1, that is, $R^2$ and $R^3$ are preferably $-CH_3$. Also, the hydrogen that bonds to the benzene ring in general formula (1)

may be substituted with another element or another group.

(i-1-2) Second epoxy resin

The softening temperature of the second epoxy resin is higher than the first epoxy resin and the weight-average molecular weight is 20,000 or more. The second epoxy resin has relatively high softening temperature (relatively low crystallinity), compared to the above described first epoxy resin. Since the second epoxy resin has relatively low crystallinity and has high molecular weight, the blocking resistance is easily improved. Further, since the second epoxy resin has relatively low crystallinity and has high molecular weight, the increase of the pressure-sensitive adhesiveness (tack property) due to the first epoxy resin can be suppressed. Also, the second epoxy resin is preferably an epoxy resin that is solid at ordinary temperature (23°C).

The weight-average molecular weight (Mw) of the second epoxy resin is usually higher than the weight-average molecular weight (Mw) of the first epoxy resin. Mw of the second epoxy resin is usually, 20,000 or more, may be 30,000 or more, and may be 35,000 or more. Meanwhile, Mw of the second epoxy resin is, for example, 100,000 or less.

The epoxy equivalent of the second epoxy resin may be higher than, less than, or equal to the epoxy equivalent of the first epoxy resin. The epoxy equivalent of the second epoxy resin is, for example, 4000 g/eq or more, may be 5000 g/eq or more, and may be 6000 g/eq or more. Meanwhile, the epoxy equivalent of the second epoxy resin is, for example, 20000 g/eq or less.

The second epoxy resin may be a monofunctional epoxy resin, may be a bifunctional epoxy resin, may be a trifunctional epoxy resin, and may be an epoxy resin of a tetrafunctional or more.

The softening temperature of the second epoxy resin is usually higher than the softening temperature of the first epoxy resin. The difference between the two is, for example, 10°C or more, may be 20°C or more, and may be 30°C or more. The softening temperature of the second epoxy resin is, for example, 80°C or more, and may be 90°C or more. Meanwhile, the softening temperature of the second epoxy resin is, for example, 180°C or less.

The configuration of the second epoxy resin is similar to that of the above describe first epoxy resin; thus, the description herein is omitted.

(i-2) Acrylic resin

When the curable adhesive is the epoxy resin based adhesive, the adhesive composition may further include an acrylic resin that is compatible with the epoxy resin. The acrylic resin is a resin compatibilized with the epoxy resin. Since the acrylic resin is compatible with the epoxy resin, the toughness of the adhesive layer including the adhesive composition is easily improved. As the result, the adhesiveness after foamed and cured may be improved. Further, the acrylic resin is believed to function as a compatibilizing agent of the foaming agent (such as a foaming agent whose shell portion is an acrylonitrile copolymer resin), and the adhesiveness after foamed and cured is improved by being uniformly dispersed and foamed. Also, the flexibility due to the acrylic resin is exhibited so that the close adhesiveness with respect to the substrate after foamed and cured, and cracking resistance after foamed and cured may be improved. Also, the hardness of the adhesive layer surface may be maintained at high level, by the acrylic resin being compatibilized with the epoxy resin. Meanwhile, if the acrylic resin is incompatible with the epoxy resin, a flexible portion is formed on the adhesive layer surface so that the interface with the first member or the second member is not slippery enough, and the workability may be deteriorated.

The acrylic resin in the present embodiment is compatibilized with the epoxy resin. Here, the state that the acrylic resin being compatibilized with the epoxy resin may be confirmed by, for example, observing the cross-section of the adhesive layer including the adhesive composition with a scanning electron microscope (SEM) or a transmission electron microscope (TEM), to confirm that a micron sized island is not formed. More specifically, the average particle size of the island is preferably 1 μm or less. Among the above, the average particle size of the island may be 0.5 μm or less, and may be 0.3 μm or less. The number of the samples is preferably large, and is, for example, 100 or more. The area of the observed region is in a range of 100 μm × 100 μm or, when the thickness of the adhesive layer is 100 μm or less, the observation is carried out in a range of thickness × 100 μm.

The weight-average molecular weight (Mw) of the acrylic resin is, for example, 50,000 or more, may be 70,000 or more, and may be 100,000 or more. The first epoxy resin is relatively high in crystallinity so that the melt viscosity (or dynamic viscoelasticity) upon heating may be too low, and a shrinkage may occur during curing after foaming (the term from the completion of foaming of the foaming agent until the adhesive composition is cured). However, by using the acrylic resin having a certain level of molecular weight, the melt viscosity may be suppressed from being too low so that the shrinkage during curing after foaming is less likely to occur. Meanwhile, Mw of the acrylic resin is, for example, 1,500,000 or less. The weight-average molecular weight of the acrylic resin is measured by GPC (eluent: THF, standard substance: PS, sample: 20 μl, flow: 1 ml/minute, column temperature: 40°C) .

The glass transition temperature (Tg) of the acrylic resin is, for example, 90°C or more, and may be 100°C or

more. Meanwhile, Tg of the acrylic resin is, for example, 180°C or less. Tg is measured by a differential scanning calorimetry (DSC) according to JIS K7121:2012 corresponding to ISO 3146.

The storage elastic modulus (E') of the acrylic resin at foaming start temperature may be 1 x $10^6$ Pa or less. By E' being low at the start of the foaming, the flowability is improved so that preferable foaming ability may be obtained. Meanwhile, E' at foaming start temperature is, for example, $1 \times 10^5$ Pa or more. Incidentally, the foaming start temperature is a temperature that varies according to the type of the foaming agent. Also, when two types or more of the foaming agents are used as the foaming agent, the starting temperature of the main foaming reaction is regarded as the foaming start temperature.

The storage elastic modulus (E') of the acrylic resin at curing start temperature may be $1 \times 10^5$ Pa or more. As described above, the shrinkage may occur during curing after foaming (the term from the completion of foaming of the foaming agent until the adhesive composition is cured). However, the shrinkage may be suppressed and preferable shape retainability may be obtained by E' being high at curing start temperature. Incidentally, the curing start temperature is a temperature that varies according to the type of the curing agent. Also, when two types or more of the curing agents are used as the curing agent, the start temperature of the main curing reaction is regarded as the curing start temperature.

Also, the average value of the storage elastic modulus (E') of the acrylic resin at 0°C or more and 100°C or less may be $1 \times 10^6$ Pa or more. A preferable non-pressure-sensitive adhesiveness and blocking resistance can be obtained when the average value of E' before the foaming is high. Meanwhile, the average value of the storage elastic modulus (E') at 0°C or more and 100°C or less is, for example, $1 \times 10^8$ Pa or less.

The acrylic resin may include a polar group. Examples of the polar group may include an epoxy group, a hydroxyl group, a carboxyl group, a nitrile group, and an amide group.

The acrylic resin may be a homopolymer of acrylic acid ester monomers, and a mixture component including two types or more of the above described homopolymer; or the acrylic resin may be a copolymer of two types or more acrylic acid ester monomers that is a component including one or more copolymer. Also, the acrylic resin may be a mixture component of the homopolymer and the copolymer described above. The "acrylic acid" in the acrylic acid ester monomers includes the concept of a methacrylic acid. Specifically, the acrylic resin may be a mixture of the methacrylate polymer and the acrylate polymer, and may be an acrylic acid ester polymer such as acrylate-acrylate, methacrylate-methacrylate, and methacrylate-acrylate. Among them, the acrylic resin preferably includes a copolymer of two types or more acrylic acid ester monomers ((meth)acrylic acid ester copolymer).

Examples of the monomer component constituting the (meth)acrylic acid ester copolymer may include the monomer components described in Japanese Patent Application Laid-Open (JP-A) No. 2014-065889. The monomer component may include the above described polar group. Examples of the (meth)acrylic acid ester copolymer may include an ethyl acrylate-butyl acrylate-acrylonitrile copolymer, an ethyl acrylate-acrylonitrile copolymer, and a butyl acrylate-acrylonitrile copolymer. Incidentally, the "acrylic acid" such as acrylic acid methyl and acrylic acid ethyl includes "methacrylic acid" such as (meth)acrylic acid methyl and (meth)acrylic acid ethyl.

As the (meth) acrylic acid ester copolymer, a block copolymer is preferable, and an acrylic based block copolymer such as a methacrylate-acrylate copolymer is further preferable. Examples of the (meth) acrylate constituting the acrylic based block copolymer may include methyl acrylate, ethyl acrylate, propyl acrylate, butyl acrylate, lauryl acrylate, 2-ethylhexyl acrylate, cyclohexyl acrylate, and benzyl acrylate. These "acrylate" also includes "methacrylate".

Specific examples of the methacrylate-acrylate copolymer may include acrylic based copolymers such as methyl methacrylate-butyl acrylate-methyl methacrylate (MMA-BA-MMA) copolymers. The MMA-BA-MMA copolymers also include block copolymers of polymethylmethacrylate-polybutylacrylate-polymethylmethacrylate (PMMA-PBA-PMMA).

The acrylic based copolymer may not include a polar group, and may be a modified product wherein the above described polar group is introduced into a part thereof. Since the modified product is easily compatible with the epoxy resin, adhesiveness is further improved.

Among them, the acrylic resin is preferably a (meth) acrylic acid ester copolymer including a first polymer portion having glass transition temperature (Tg) of 10°C or less, and a second polymer portion having glass transition temperature (Tg) of 20°C or more. Such a (meth) acrylic acid ester copolymer includes a first polymer portion to be a soft segment and a second polymer portion to be a hard segment.

The expression of the above effect may be estimated as follows. By using an acrylic resin including both of a soft segment and a hard segment, such as the above (meth) acrylic acid ester copolymer, the hard segment contributes to heat resistance, and the soft segment contributes to toughness or flexibility, so that an adhesive layer having good heat resistance, toughness, and flexibility may be obtained.

At least one of the first polymer portion and the second polymer portion included in the above (meth) acrylic acid ester copolymer has compatibility with the epoxy resin. When the first polymer portion has compatibility with the epoxy resin, flexibility may be increased. Also, when the second polymer portion has compatibility with the epoxy resin, the cohesiveness and toughness can be improved.

When one of the first polymer portion and the second polymer portion has no compatibility with the epoxy resin, the (meth) acrylic acid ester copolymer includes a compatible site that is a polymer portion compatible with the epoxy resin

and an incompatible site that is a polymer portion not compatible with the epoxy resin. In this case, when the above (meth) acrylic acid ester copolymer is added, the compatible site is compatibilized with the epoxy resin, and the incompatible site is not compatibilized with the epoxy resin, so that fine phase separation occurs. As the result, a fine sea-island structure is developed. The sea-island structure differs according to the type of the (meth) acrylic acid ester copolymer, the compatibility of the first polymer portion and the second polymer portion included in the (meth) acrylic acid ester copolymer, and the existence or non-existence of modification by introducing a polar group. Examples thereof may include a sea-island structure wherein a cured product of the epoxy resin and a compatible site of the (meth) acrylic acid ester copolymer are seas, and a non-compatible site of the (meth) acrylic acid ester copolymer is an island; a sea-island structure wherein a non-compatible site of the (meth) acrylic acid ester copolymer is a sea, and a cured product of the epoxy resin and a compatible site of the (meth) acrylic acid ester copolymer are islands; and a sea-island structure wherein the (meth) acrylic acid ester copolymer is a sea, and a cured product of the epoxy resin is an island. By having such a sea-island structure, it is possible to easily disperse the stress, so that it is possible to avoid interfacial breakage and to obtain excellent adhesiveness after foamed and cured.

Among the above, the (meth) acrylic acid ester copolymer is preferably a block copolymer, and particularly preferably an A-B-A block copolymer including a polymer block A as a compatible site and a polymer block B as a non-compatible site. Further, it is preferable to be a A-B-A block copolymer wherein the first polymer portion is a non-compatible site and the second polymer portion is a compatible site, and the first polymer portion is a polymer block B and the second polymer portion is a polymer block A. By using such an A-B-A block copolymer as the acrylic resin, the island portion may be decreased in the sea-island structure wherein a cured product of the epoxy resin and a compatible site of the (meth) acrylic acid ester copolymer are seas, and a non-compatible site of the (meth) acrylic acid ester copolymer is an island. Also, the sea portion may be decreased in the case of the sea-island structure wherein a non-compatible site of the (meth) acrylic acid ester copolymer is a sea, a cured product of the epoxy resin, and a compatible site of the (meth) acrylic acid ester copolymer are islands; or in the case of the sea-island structure wherein the (meth) acrylic acid ester copolymer is a sea and a cured product of the epoxy resin is an island.

Further, the above (meth) acrylic acid ester copolymer may be a modified product obtained by introducing the above described polar group into a part of the first polymer portion or the second polymer portion.

Tg of the first polymer portion included in the (meth) acrylic acid ester copolymer is 10°C or less, may be in a range of -150°C or more and 10°C or less, among the above, in a range of -130°C or more and 0°C or less, particularly in a range of -110°C or more and -10°C or less.

Incidentally, Tg of the first polymer portion may be determined by calculating with the following formula based on Tg (K) of each homopolymer described in "POLYMERHANDBOOK 3rd Edition" (issued by John Wiley & Sons, Ink.).

$$1/Tg\ (K) = W_1/Tg_1 + W_2/Tg_2 + \cdots + W_n/Tg_n$$

$W_n$: mass fraction of each monomer

$Tg_n$: Tg (K) of the homopolymer of each monomer and publicly available listed values such as those described in the Polymer Handbook (3rd Ed., J. Brandrup and E. H. Immergut, WILEY INTERSCIENCE) may be used. The same applies to Tg of the second polymer portion described later.

The first polymer portion included in the above (meth) acrylic acid ester copolymer may be a homopolymer, and may be a copolymer; among them, a homopolymer is preferable. The monomer component and the polymer component constituting the first polymer portion may be any monomer component and a polymer component capable of obtaining a first polymer portion with Tg in a predetermined range, and examples thereof may include acrylic acid ester monomers such as acrylic acid butyl, acrylic acid 2-ethylhexyl, acrylic acid isononyl, and acrylic acid methyl; other monomers such as vinyl acetate, acetal, and urethane; a polar group containing monomer including the above described polar group; and copolymers such as EVA.

Tg of the second polymer portion included in the (meth) acrylic acid ester copolymer is 20°C or more, may be in a range of 20°C or more and 150°C or less, among the above, in a range of 30°C or more and 150°C or less, particularly in a range of 40°C or more and 150°C or less.

Also, the second polymer portion included in the (meth) acrylic acid ester copolymer may be a homopolymer, may be a copolymer; among them, a homopolymer is preferable. The monomer component constituting the second polymer portion may be any monomer component capable of obtaining a second polymer portion with Tg in a predetermined range, and examples thereof may include acrylic acid ester monomers such as methyl methacrylate; other monomers such as acrylamide, styrene, vinyl chloride, amide, acrylonitrile, cellulose acetate, phenol, urethane, vinylidene chloride, methylene chloride, and methacrylonitrile; and a polar group containing monomers including the above described polar group.

Specific examples of the (meth) acrylic acid ester copolymer including the first polymer portion and the second polymer portion described above may include the above described MMA-BA-MMA copolymers.

(i-3) Curing agent

As the curing agent in the present embodiment, a curing agent generally used in an epoxy resin based adhesive may be used. The curing agent is preferably solid at ordinary temperature (23°C). The curing agent that is solid at ordinary temperature can improve storage stability (pot life), compared to the curing agent that is liquid at ordinary temperature. Also, the curing agent may be a latent curing agent. Also, the curing agent may be a curing agent wherein a curing reaction occurs by heat, and may be a curing agent wherein a curing reaction occurs by light. Also, a curing agent may be used alone, and 2 types or more of them may be used.

Reaction start temperature of the curing agent is, for example, 110°C or more, and may be 130°C or more. When the reaction start temperature is too low, the reaction may be started early, and curing may occur in a condition where the flexibility and fluidity of the resin component are low, and uniform curing may hardly occur. Meanwhile, the reaction start temperature of the curing agent is, for example, 200°C or less. When the reaction start temperature is too high, there is a possibility that the resin component is deteriorated. Incidentally, in addition to the epoxy resin, for example, when a resin having high heat resistance such as a phenol resin is used, since deterioration of the resin component is small, the reaction start temperature of the curing agent may be, for example, 300°C or less. The reaction start temperature of the curing agent is determined by differential scanning calorimetry (DSC).

Specific examples of the curing agent may include imidazole based curing agents, phenol based curing agents, amine based curing agents, acid anhydride based curing agents, isocyanate based curing agents, and thiol based curing agents.

Examples of the imidazole based curing agent may include imidazole, 2-phenyl-4,5-dihydroxymethylimidazole, 2-phenyl-4-methyl-5-hydroxymethylimidazole, 2-methylimidazole, 2-ethylimidazole, 2-ethyl-4-methylimidazole, 2-isopropylimidazole, 2-phenylimidazole, carboxylates of imidazole compounds, and adducts with epoxy compounds. Also, it is preferable that the imidazole based curing agent includes a hydroxyl group. Since it crystallizes by hydrogen bonding between hydroxy groups, the reaction start temperature tends to be high.

Examples of the phenol based curing agent may include phenol resins. Further, examples of the phenol resin may include resol type phenol resin and a novolac type phenol resin. From the viewpoint of the close adhesiveness with respect to the substrate after foamed and cured, and cracking resistance after foamed and cured, for example, a phenol type novolac resin having a Tg of 110°C or less is particularly preferable. Also, a phenol based curing agent and an imidazole based curing agent may be used in combination. In this case, it is preferable to use the imidazole based curing agent as a curing catalyst.

Examples of the amine based curing agent may include aliphatic amines, aromatic amines, alicyclic amines, and polyamideamines. Examples of the aliphatic amines may include diethylene triamine (DETA), triethylene tetramine (TETA), and meta-xylylenediamine (MXDA). Examples of the aromatic amines may include diaminodiphenylmethane (DDM), m-phenylenediamine (MPDA), and diaminodiphenylsulfone (DDS). Also, as the amine based curing agent, dicyandiamide based curing agents such as dicyandiamide (DICY); organic acid dihydrazide based curing agents; amine adduct based curing agents; and ketimine based curing agents may be used.

Examples of the acid anhydride curing agent may include alicyclic acid anhydrides (liquid acid anhydrides) and aromatic acid anhydrides. Examples of the alicyclic acid anhydrides may include hexahydrophthalic anhydride (HHPA) and methyltetrahydrophthalic anhydride (MTHPA). Examples of the aromatic acid anhydride may include trimellitic anhydride (TMA), pyromellitic dianhydride (PMDA), and benzophenone tetracarboxylic dianhydride (BTDA).

Examples of the isocyanate based curing agent may include blocked isocyanate.

Examples of the thiol based curing agent may include ester binding type thiol compounds, aliphatic ether binding type thiol compounds, and aromatic ether binding type thiol compounds.

(ii) Foaming agent

As the foaming agent used for the cured adhesive layer in the present embodiment, a foaming agent generally used for an adhesive layer of a foaming adhesive sheet may be used. Also, the foaming agent may be a foaming agent wherein a foaming reaction occurs by heat, and may be a foaming agent wherein a foaming reaction occurs by light.

Examples of the foaming agent may include thermally expandable microcapsules. It is preferable that the thermally expandable microcapsule includes a thermal expansion agent such as a hydrocarbon as a core, and a resin such as an acrylonitrile copolymer as a shell.

Also, as the foaming agent, for example, an organic based foaming agent and an inorganic based foaming agent may be used. Examples of the organic based foaming agent may include azo foaming agents such as azodicarbonamide (ADCA), azobisformamide, and azobisisobutyronitrile; fluorinated alkane based foaming agents such as trichloromonofluoromethane; hydrazine based foaming agents such as paratoluenesulfonylhydrazide; semicarbazide based foaming agents such as p-toluenesulfonylsemicarbazide; triazole based foaming agent such as 5-morpholyl-1,2,3,4-thiatriazole; and N-nitroso based foaming agents such as N,N-dinitrosoterephthalamide. Meanwhile, examples of the inorganic based

foaming agent may include ammonium carbonate, ammonium hydrogencarbonate, ammonium nitrite, ammonium borohydride, and azides.

It is preferable that foaming start temperature of the foaming agent is softening temperature or more of the base resin of the curable adhesive such as the epoxy resin, and also, activation temperature or less of the curing reaction of the base resin of the curable adhesive such as the epoxy resin. Foaming start temperature of the foaming agent is, for example, 70°C or more, and may be 100°C or more. When the reaction start temperature is too low, the foaming may be started early, and foaming may occur in a condition where the flexibility and fluidity of the resin component are low, and uniform foaming may hardly occur. Meanwhile, the foaming start temperature of the foaming agent is, for example, 210°C or less. When the foaming start temperature is too high, there is a possibility that the resin component is deteriorated.

Incidentally softening temperature of the base resin of the curable adhesive such as the epoxy resin is measured using the ring and ball type softening temperature testing method specified in JIS K7234:1986.

Also, as will be discussed later, when the foaming agent is a thermally expandable microcapsule, the maximum foaming temperature of the foaming agent is preferably higher than the glass transition temperature of the base resin of the curable adhesive such as epoxy resin. The maximum foaming temperature of the foaming agent is preferably, for example 140°C or more, more preferably 150°C or more, further preferably 160°C or more, and particularly preferably 175°C or more. As described above, when the maximum foaming temperature of the foaming agent is high, the foaming agent can be prevented from shrinking in the foaming and curing process of the adhesive composition causing the decrease of the thickness of the foam layer (cured adhesive layer). This can suppress the size of the bubbles from getting larger relative to the thickness of the foam layer (cured adhesive layer). Therefore, by making the maximum foaming temperature of the foaming agent in the range described above, large bubbles can be suppressed. Also, when the maximum foaming temperature is too low, the thickness of the cured adhesive layer cannot be maintained due to the shrinkage of the foaming agent so that the adhesive strength may be deteriorated. Meanwhile, the maximum foaming temperature of the foaming agent is preferably, for example, 230°C or less, more preferably 220°C or less, and further preferably 210°C or less. When the maximum foaming temperature is too high, the expansion of the foaming agent may not be sufficient so that the adhesion strength may be reduced. Specifically, the maximum foaming temperature of the foaming agent is preferably 140°C or more and 230°C or less, more preferably 150°C or more and 220°C or less, and further preferably 160°C or more and 210°C or less. Also, the maximum foaming temperature of the foaming agent is also preferably 175°C or more and 220°C or less.

Here, the foaming start temperature and maximum foaming temperature of the foaming agent are determined by thermomechanical analysis (TMA). Specifically, in the thermomechanical analysis (TMA), when measuring at a temperature rising rate of 20°C/minute and a load force of 0.06 N, plotting the temperatures on the x-axis and the displacements on the y-axis, the temperature at which the maximum displacement is exhibited is regarded as the maximum foaming temperature, and the temperature at which the displacement is 3% of the maximum displacement is regarded as the foaming start temperature.

The average particle size of the foaming agent may be, for example, 10 μm or more, may be 13 μm or more, and may be 17 μm or more. Also, the average particle size of the foaming agent is preferably the thickness of the adhesive layer of the foaming adhesive sheet or less, may be, for example, 44 μm or less, may be 30 μm or less, and may be 24 μm or less.

Incidentally, the average particle size of the foaming agent is a particle size at integrated value of 50% in the particle size distribution determined by a laser diffraction/scattering method. Also, when measuring the average particle size of the foaming agent, the foaming agent is separated by dissolving the adhesive composition in a solvent. The solvent is not particularly limited as long as the solvent is capable of dissolving the components other than the foaming agent included in the adhesive composition, and is appropriately selected according to the type, for example, of the curable adhesive, and for example, a solvent used for the adhesive composition may be used. Specifically, for example, methyl ethyl ketone, ethyl acetate, and toluene may be used.

Foaming ratio of the foaming agent at the maximum foaming temperature is, for example, 1.5 times or more, and may be 2 times or more. Meanwhile, foaming ratio of the foaming agent at the maximum foaming temperature is, for example, 15 times or less, and may be 10 times or less. Incidentally, the foaming ratio of the foaming agent is the ratio of the diameter of the foaming agent after foaming, with respect to the diameter of the foaming agent before foaming.

The content of the foaming agent in the adhesive composition used for the cured adhesive layer is similar to the content of the foaming agent in the adhesive layer in the foaming adhesive sheet described below.

(iii) Other components

For example, when the curable adhesive is the epoxy resin based adhesive, the adhesive composition used for the cured adhesive layer in the present embodiment may include only the epoxy resin and the acrylic resin as the resin component, and may further include other resins. Examples of the other resin may include urethane resins.

The adhesive composition may include an additive such as silane coupling agents, fillers, antioxidants, light stabilizers, ultraviolet absorbers, lubricants, plasticizers, antistatic agents, cross-linking agents, and colorants, if necessary. Examples of the silane coupling agent may include epoxy based silane coupling agents. Examples of the filler may include inorganic fillers such as calcium carbonate, aluminum hydroxide, magnesium hydroxide, antimony trioxide, zinc borate, molybdenum compounds, and titanium dioxide. Examples of the antioxidant may include phenol based antioxidants and sulfur based antioxidants.

(c) Other points about cured adhesive layer

The thickness of the cured adhesive layer is not particularly limited, and it is appropriately set according to the use application. The thickness of the cured adhesive layer is, for example, 30 μm or more and 1000 μm or less, may be 40 μm or more and 900 μm or less, and may be 50 μm or more and 800 μm or less. When the cured adhesive layer is too thin, sufficient adhesiveness may not be obtained. Also, when the cured adhesive layer is too thick, the quality of the surface may be deteriorated.

The cured adhesive layer may be a continuous layer, and may be a discontinuous layer.

The cured adhesive layer includes a foamed and cured product of the adhesive composition. Examples of a method for foaming and curing the adhesive composition may include a heating or a light irradiation. Among them, the adhesive composition is preferably foamed and cured by heating. The method by heating may be applied even when the first member and the second member are not transparent, such as a metal member.

(d) First cured adhesive layer and second cured adhesive layer

In the present embodiment, when the adhesive member includes the first cured adhesive layer and second cured adhesive layer, or when the adhesive member includes the first cured adhesive layer, substrate and second cured adhesive layer in this order, at least one of the first cured adhesive layer and second cured adhesive layer have only to include the foamed and cured product of an adhesive composition including a curable adhesive and a foaming agent. For example, among the first cured adhesive layer and the second cured adhesive layer, one may include a foamed and cured product of an adhesive composition including a curable adhesive and a foaming agent, and the other one may include a cured product of an adhesive composition including a curable adhesive and not including a foaming agent; or both of the first cured adhesive layer and second cured adhesive layer may include a foamed and cured product of an adhesive composition including a curable adhesive and a foaming agent. Among them, it is preferable that both of the first cured adhesive layer and second cured adhesive layer include a foamed and cured product of an adhesive composition including a curable adhesive and a foaming agent. The reason therefor is to improve the adhesiveness. Also, when a product is produced using the foaming adhesive sheet, the insertion property of the foaming adhesive sheet may be improved.

(2) Substrate

The adhesive member in the present embodiment may include a substrate between the first cured adhesive layer and second cured adhesive layer. When the substrate is disposed between the first cured adhesive layer and the second cured adhesive layer, during the production of the product using the foaming adhesive sheet, the handling property and workability of the foaming adhesive sheet may be improved. Meanwhile, when the substrate is not disposed between the first cured adhesive layer and the second cured adhesive layer, during the production of the product using the foaming adhesive sheet, the total thickness of the foaming adhesive sheet can be thinner so that the foaming adhesive sheet can be inserted into a narrow gap.

The substrate preferably has an insulating property. Also, it is preferable that the substrate is in a sheet form. The substrate may have a single layer structure, and may have a multiple layer structure. Also, the substrate may or may not have a porous structure inside.

Examples of the substrate may include a resin substrate and a nonwoven fabric.

Examples of the resin included in the resin substrate may include polyester resins, polycarbonates, polyarylates, polyurethanes, polyamide resins, polyimide resins, polysulfone resins, polyetherketone resin, polyphenylene sulfides (PPS); and modified polyphenylene oxides. Examples of the polyester resin may include polyethylene terephthalate (PET), polybutylene terephthalate, polyethylene naphthalate (PEN), and aromatic polyesters. Examples of the polyamide resins may include polyamide, and polyetheramide. Examples of the polyimide resin may include polyimide, polyetherimide, and polyamideimide. Examples of the polysulfone resin may include polysulfone, and polyethersulfone. Examples of the polyetherketone resin may include polyetherketone, and polyetheretherketone. Also, a liquid crystal polymer (LCP) may be used as the resin. The glass transition temperature of the resin is, for example, 80°C or more, may be 140°C or more, and may be 200°C or more.

Examples of the nonwoven fabric may include nonwoven fabrics including fibers such as cellulose fibers, polyester fibers, nylon fibers, aramid fibers, polyphenylene sulfide fibers, liquid crystal polymer fibers, glass fibers, metal fibers, and carbon fibers.

In order to improve the close adhesiveness with respect to the first cured adhesive layer and second cured adhesive layer, the surface of the substrate may be subjected to a surface treatment.
The thickness of the substrate is not particularly limited, and is, for example, 2 μm or more and 200 μm or less, may be 5 μm or more and 100 μm or less, and may be 9 μm or more and 50 μm or less.

(3) Other constitution

The adhesive member in the present embodiment may include a first intermediate layer between the substrate and the first cured adhesive layer. Also, the adhesive member in the present embodiment may include a second intermediate layer between the substrate and the second cured adhesive layer. By disposing the first intermediate layer or the second intermediate layer, the close adhesiveness of the first cured adhesive layer or the second cured adhesive layer, with respect to the substrate, may be improved. Further, when producing a product using the foaming adhesive sheet, by disposing the first intermediate layer or the second intermediate layer, for example, the stress applied to a bent portion when the foaming adhesive sheet is bent may be eased, or the stress applied to a cut portion when the foaming adhesive sheet is cut may be eased. As the result, lifting off or peeling off of the first adhesive layer or the second adhesive layer from the substrate may be suppressed, when the foaming adhesive sheet is bent or cut.
For example, in the product 100 shown in FIG. 4, in the adhesive member 30, first intermediate layer 3a is disposed between the substrate 12 and the first cured adhesive layer 11a, and second intermediate layer 13b is disposed between the substrate 12 and the second cured adhesive layer 11b. Incidentally, in FIG. 4, although the adhesive member 30 includes both the first intermediate layer 13a and the second intermediate layer 13b, only either one may be included.
The adhesive member have only to include at least one of the first intermediate layer and the second intermediate layer, and for example, the adhesive member may include only the first intermediate layer disposed between the substrate and first cured adhesive layer; may include only the second intermediate layer disposed between the substrate and second cured adhesive layer; and may include both of the first intermediate layer disposed between the substrate and first cured adhesive layer and the second intermediate layer disposed between the substrate and second cured adhesive layer. Among them, it is preferable that the first intermediate layer is disposed between the substrate and first cured adhesive layer, and the second intermediate layer is disposed between the substrate and second cured adhesive layer.
The material included in the first intermediate layer and second intermediate layer is not particularly limited as long as the material is capable of improving the close adhesiveness of the substrate and the first cured adhesive layer and second cured adhesive layer, and capable of releasing the stress, and the material is appropriately selected according to the material or the like of the substrate, the first cured adhesive layer and second cured adhesive layer. Examples thereof may include polyester, polyvinyl chloride, polyvinyl acetate, polyurethane, a polymer obtained by copolymerizing at least 2 types or more of them, cross-linked material thereof, and mixture thereof.
The cross-linked material is a cross-linked material wherein the resin described above is cross-linked by a curing agent. Examples of the curing agent may include isocyanate based curing agents. Also, for example, when reactive group/NCO equivalent is regarded as 1, the isocyanate based curing agent is preferably added at proportion of 0.5% by mass or more and 20% by mass or less, with respect to the resin.
Among the above, the first intermediate layer and second intermediate layer preferably include a cross-linked resin. Incidentally, the cross-linked resin means those not fused at high temperature. Thereby, the adhesive force under high temperature, that is, the heat resistance may be improved.
The thickness of the first intermediate layer and second intermediate layer is not particularly limited, and is, for example, 0.1 μm or more, may be 0.5 μm or more, and may be 1 μm or more. When a product is produced using the foaming adhesive sheet, if the first intermediate layer or second intermediate layer is too thin, sufficient effect of suppressing the peeling off of the first adhesive layer or second adhesive layer from the substrate when the foaming adhesive sheet is bent or cut, may not be obtained. Meanwhile, the thickness of the first intermediate layer or second intermediate layer is, for example, 4 μm or less, and may be 3.5 μm or less. Since the heat resistance of the first intermediate layer and second intermediate layer themselves is usually not high, when the first intermediate layer or second intermediate layer is too thick, the heat resistance (adhesive force under high temperature) may be reduced.
The first intermediate layer and second intermediate layer may be formed, for example, by applying a resin composition and removing a solvent. Examples of application method may include roll coating, reverse roll coating, transfer roll coating, gravure coating, gravure reverse coating, comma coating, rod coating, blade coating, bar coating, wire bar coating, die coating, lip coating, and dip coating.

2. First member and second member

The first member and the second member in the present disclosure are selected as appropriate according to the use application and so on of the product. The first member and the second member are preferably those required to be adhered and insulated. Examples thereof may include the components of electrical/electronic equipment, and specific

examples may include the stator cores and coils of rotary electric stators; and the cores and permanent magnets of embedded magnet motors.

3. A method for producing product

The method for producing a product in the present embodiment will be described in the section "B. Method for producing product" below.

II. Second embodiment of product

The second embodiment of the product in the present disclosure is a product comprising a first member, a second member and an adhesive member disposed between the first member and the second member, wherein the adhesive member includes at least a cured adhesive layer; the cured adhesive layer is a foam layer including a foamed and cured product of an adhesive composition including a curable adhesive and a foaming agent; and in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

FIG. 1 to FIG. 3 are schematic cross-sectional views exemplifying a product in the present embodiment. Incidentally, since FIG. 1 to FIG. 3 are described in the section of the first embodiment above, the description herein is omitted.

In the product, when the first member and second member are, for example, a component of electrical/electronic equipment, specifically the stator cores and coils of rotary electric stators; or the cores and permanent magnets of embedded magnet motors, the distance of the gap between the first member and second member is, for example, approximately several hundred μm. In this case, the thickness of the adhesive member is, for example, approximately several hundred μm, and the thickness of the cured adhesive layer of the adhesive member is also, for example, approximately several hundred μm.

In such a product described above, when the adhesive member includes one cured adhesive layer, when the cured adhesive layer is the foam layer, and when large bubbles whose size is 100 μm or more exist, in the region including such bubbles, the cured adhesive layer may not be in contact with the first member and second member; or the contacting area between the cured adhesive layer and the first member and the contacting area between the cured adhesive layer and the second member may be extremely small. Therefore, it is believed that adhesion defects such as peeling, floating, and cracking of the cured adhesive layer is likely to occur, starting from the bubbles.

Meanwhile, in the product in the present embodiment, when the adhesive member includes one cured adhesive layer, and when the cured adhesive layer is the foam layer, the adhesion defect can be suppressed since, in a cross-sectional surface parallel to a thickness direction of the foam layer, the number of bubbles having a length, in the thickness direction of the foam layer, of 100 μm or less, is a predetermined value or less per a predetermined length in a direction perpendicular to the thickness direction of the foam layer. Therefore, the adhesiveness may be improved.

Also, in such a product described above, when the adhesive member includes the first cured adhesive layer and second cured adhesive layer, the first cured adhesive layer and second cured adhesive layer are foam layers, and when large bubbles whose size is 100 μm or more exist, in the region including such bubbles, the first cured adhesive layer may not be in contact with the first member; the second cured adhesive layer may not be in contact with the second member; or the contacting area between the first cured adhesive layer and the first member may be extremely small; the contacting area between the second cured adhesive layer and the second member may be extremely small. Therefore, it is believed that adhesion defects such as peeling, floating, and cracking of the first cured adhesive layer or second cured adhesive layer is likely to occur, starting from the bubbles.

Meanwhile, in the product in the present embodiment, when the adhesive member includes the first cured adhesive layer and second cured adhesive layer, and when the first cured adhesive layer and second cured adhesive layer are foam layers, the adhesion defect can be suppressed since, in a cross-sectional surface parallel to a thickness direction of the foam layer, the number of bubbles having a length, in the thickness direction of the foam layer, in a predetermined range with respect to the thickness of the foam layer, is a predetermined value or less per a predetermined length in a direction perpendicular to the thickness direction of the foam layer. Therefore, the adhesiveness may be improved.

Incidentally, when the adhesive member includes the first cured adhesive layer and second cured adhesive layer, and when either one of the first cured adhesive layer and second cured adhesive layer is the foam layer, the adhesion defect can be similarly suppressed, and the adhesiveness can be improved.

Also, in such a product described above, when the adhesive member includes the first cured adhesive layer, the substrate and second cured adhesive layer in this order, when the first cured adhesive layer and second cured adhesive layer are foam layers, and when large bubbles whose size is approximately the thickness of the foam layer exist, in the region including such bubbles, the first cured adhesive layer may not be in contact with the first member and substrate; the

second cured adhesive layer may not be in contact with the second member and substrate; the contacting area between the first cured adhesive layer and the first member and substrate may be extremely small; or the contacting area between the second cured adhesive layer and the second member and substrate may be extremely small. Therefore, it is believed that adhesion defects such as peeling, floating, and cracking of the first cured adhesive layer and second cured adhesive layer are likely to occur, starting from the bubbles.

Meanwhile, in the product in the present embodiment, when the adhesive member includes the first cured adhesive layer, the substrate, and second cured adhesive layer in this order, and when the first cured adhesive layer and second cured adhesive layer are foam layers, the adhesion defect can be suppressed since, in a cross-sectional surface parallel to a thickness direction of the foam layer, the number of bubbles having a length, in the thickness direction of the foam layer, in a predetermined range with respect to the thickness of the foam layer, is a predetermined value or less per a predetermined length in a direction perpendicular to the thickness direction of the foam layer. Therefore, the adhesiveness may be improved.

Incidentally, when the adhesive member includes the first cured adhesive layer, substrate and second cured adhesive layer, and when either one of the first cured adhesive layer and second cured adhesive layer is the foam layer, the adhesion defect can be similarly suppressed, and the adhesiveness can be improved.

Therefore, in the product in the present embodiment, the trustability and durability can be improved.

In the product in the present embodiment, the adhesive member, first member and second member can be similar to the first embodiment described above.

Also, the method for producing a product in the present embodiment will be described in the section "B. Method for producing product" below.

The cured adhesive layer in the present embodiment is a foam layer including a foamed and cured product of an adhesive composition including a curable adhesive and a foaming agent, and it includes a bubble inside thereof. In a cross-sectional surface parallel to a thickness direction of the foam layer, the number of bubbles having a length, in the thickness direction of the foam layer, of 100 μm or more, is less than 7 per 4 mm length in a direction perpendicular to the thickness direction of the foam layer. Among them, the number of the bubbles is preferably 3 or less, more preferably 2 or less, further preferably 1 or less, and particularly preferably 0.

Also, among them, in a cross-sectional surface parallel to a thickness direction of the foam layer, number of bubbles having a length, in the thickness direction of the foam layer, of 150 μm or more, is preferably less than 7, more preferably 3 or less, further preferably 2 or less, particularly preferably 1 or less, and most preferably 0 per 4 mm length in a direction perpendicular to the thickness direction of the foam layer.

Also, in a cross-sectional surface parallel to a thickness direction of the foam layer, number of bubbles having a length, in the thickness direction of the foam layer, of 100 μm or more wherein the distance, between the bubble and the interface of the foam layer and another member adjacent to the foam layer, is 3 μm or less is preferably less than 7, more preferably 3 or less, further preferably 2 or less, particularly preferably 1 or less, and most preferably 0 per 4 mm length in a direction perpendicular to the thickness direction of the foam layer. In the region where bubbles described above exist, the cured adhesive layer is not in contact with another member adjacent to the cured adhesive layer; or the contacting area, between the cured adhesive layer and another member adjacent to the cured adhesive layer, is extremely small. Therefore, it is believed that adhesion defects such as peeling, floating, and cracking of the cured adhesive layer is likely to occur, starting from the bubbles.

Incidentally, the distance between the bubble and the interface, between the foam layer and another layer adjacent to the foam layer is, for example as shown in FIG. 3, the distance u1 from the edge portion of the bubble 31 to the interface between the foam layer 15a and another member (such as first member 20a) adjacent to one surface of the foam layer 15a; and the distance u2 from the edge portion of the bubble 31 to the interface between the foam layer 15a and another member (such as substrate 12) adjacent to another surface of the foam layer 15a.

## B. Method for producing product

The method for producing a product in the present disclosure includes two embodiments. Each embodiment is hereinafter described.

### I. First embodiment of method for producing product

The first embodiment of the method for producing a product in the present disclosure is a method for producing a product using a foaming adhesive sheet including at least an adhesive layer, wherein the adhesive layer is a foaming agent-including adhesive layer including a curable adhesive and a foaming agent; the method comprising a disposing step of disposing the foaming adhesive sheet between a first member and a second member; the method comprising an adhering step of foaming and curing the foaming agent-including adhesive layer of the foaming adhesive sheet to form a foam layer, and adhering the first member and the second member; and foaming and curing conditions in the adhering step

are set so that, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

FIGS. 5(a) to (b) are process drawings illustrating an example of a method for producing a product in the present embodiment. Firstly, as shown in FIG. 5(a), foaming adhesive sheet 10 is disposed between first member 20a and second member 20b. The foaming adhesive sheet 10 includes an adhesive layer 1, and the adhesive layer 1 is a foaming agent-including adhesive layer 5 including a curable adhesive and a foaming agent. Then, as shown in FIG. 5(b), the foaming agent-including adhesive layer 5 (adhesive layer 1) of the foaming adhesive sheet 10 is foamed and cured to form a cured adhesive layer 11 which is the foam layer 15, and adhering the first member 20a and the second member 20b by the adhesive member 30 including the cured adhesive layer 11. At this time, as shown in FIG. 1 for example, the foaming and curing conditions are set so that, in a cross-sectional surface parallel to a thickness direction D1 of the foam layer 15, the number of bubbles, among the bubbles 31, having a length "s", in the thickness direction D1 of the foam layer 15, is in a predetermined range with respect to the thickness "t" of the foam layer 15, is a predetermined value or less per a predetermined length L in a direction D2 perpendicular to the thickness direction D1 of the foam layer 15. Thereby, a product 100 is obtained.

FIGS. 6(a) to (c) are process drawings illustrating an example of a method for producing a product in the present embodiment. Firstly, as shown in FIG. 6(a), foaming adhesive sheet 10 is adhered to the second member 20b. The foaming adhesive sheet 10 includes the first adhesive layer 1a and second adhesive layer 1b, the first adhesive layer 1a and second adhesive layer 1b are respectively foaming agent-including adhesive layers 5a, 5b including a curable adhesive and a foaming agent. At this time, the surface of the second adhesive layer 1b of the foaming adhesive sheet 10 is adhered to the second member 20b. Then, as shown in FIG. 6(b), the second member 20b, on which the foaming adhesive sheet 10 is disposed, is inserted into the hole of the first member 20a. Then, as shown in FIG. 6(c), the foaming agent-including adhesive layers 5a, 5b (first adhesive layer 1a, second adhesive layer 1b) of the foaming adhesive sheet 10 are respectively foamed and cured to form a first cured adhesive layer 11a and a second cured adhesive layer 11b that are the foam layer 15a, 15b, and adhering the first member 20a and the second member 20b by the adhesive member 30 including the first cured adhesive layer 11a and the second cured adhesive layer 11b. At this time, as shown in FIG. 2 for example, the foaming and curing conditions are set so that, in respective cross-sectional surfaces parallel to the thickness direction D1 of the foam layers 15a, 15b, the number of bubbles, among the bubbles 31, having a length "s", in the thickness direction D1 of the foam layers 15a, 15b, is in a predetermined range with respect to the thicknesses t1, t2 of the foam layers 15a, 15b, is a predetermined value or less per a predetermined length L in a direction D2 perpendicular to the thickness direction D1 of the foam layers 15a, 15b. Thereby, a product 100 is obtained.

Incidentally, in FIGS. 6(a) to (c), although both the first adhesive layer 1a and the second adhesive layer 1b are the foaming agent-including adhesive layer 5a, 5b including a curable adhesive and a foaming agent, only one of the first adhesive layer and the second adhesive layer may be the foaming agent-including adhesive layer including a curable adhesive and a foaming agent.

Also, in FIGS. 6(a) to (c), although the foaming adhesive sheets 10 are adhered to both surface sides of the second member 20b, the foaming adhesive sheet may be adhered to one surface side of the second member.

In the method for producing a product in the present embodiment, as described in the section of the first embodiment of the product described above, the adhesion defect can be suppressed, and the adhesiveness can be improved by setting the foaming and curing conditions in the adhering step so that, in a cross-sectional surface parallel to a thickness direction of the foam layer, the number of bubbles, having a length, in the thickness direction of the foam layer, in a predetermined range with respect to the thickness of the foam layer, is a predetermined value or less per a predetermined length in a direction perpendicular to the thickness direction of the foam layer. Therefore, a highly trustable and highly durable product can be obtained.

Incidentally, in the present specification, for convenience, the adhesive layer located on the first member side in the foaming adhesive sheet is referred to as the first adhesive layer, and the adhesive layer located on the second member side is referred to as the second adhesive layer.

The foaming adhesive sheet used for the method for producing a product in the present embodiment, and each step of the method for producing a produce in the present embodiment are hereinafter described.

## 1. Foaming adhesive sheet

The foam adhesive sheet in the present embodiment includes at least an adhesive layer, and the adhesive layer is a foaming agent-including adhesive layer including a curable adhesive and a foaming agent.

The foaming adhesive sheet has only to include at least an adhesive layer. As shown in FIG. 7 for example, the foaming adhesive sheet 10 may include one adhesive layer 1. In this case, the adhesive layer 1 is a foaming agent-including adhesive layer 5 including a curable adhesive and a foaming agent. Also, as shown in FIG. 8 for example, the

foaming adhesive sheet 10 may include the first adhesive layer 1a and the second adhesive layer 1b. In this case, as shown in FIG. 8 for example, both the first adhesive layer 1a and the second adhesive layer 1b may be the foaming agent-including adhesive layers 5a, 5b including a curable adhesive and a foaming agent, and although not shown in the figure, either one of the first adhesive layer and the second adhesive layer may be the foaming agent-including adhesive layer including a curable adhesive and a foaming agent. Also, as shown in FIG. 9 for example, the foaming adhesive sheet 10 may include the first adhesive layer 1a, the substrate 12, and the second adhesive layer 1b, in this order. In this case, as shown in FIG. 9, both the first adhesive layer 1a and the second adhesive layer 1b may be the foaming agent-including adhesive layers 5a, 5b including a curable adhesive and a foaming agent, and although not shown in the figure, either one of the first adhesive layer and the second adhesive layer may be the foaming agent-including adhesive layer including a curable adhesive and a foaming agent.

Each constitution of a foaming adhesive sheet is hereinafter described.

(1) Adhesive layer

In the present embodiment, the adhesive layer is a foaming agent-including adhesive layer including a curable adhesive and a foaming agent.

(a) Properties of adhesive layer

When the foaming adhesive sheet in the present embodiment includes one adhesive layer, the adhesive layer is preferably practically non-pressure-sensitive adhesive (tack free). By the adhesive layer being practically non-pressure-sensitive adhesive (tack free), the foaming adhesive sheet may have excellent sliding property and blocking resistance. Therefore, the handling property and workability of the foaming adhesive sheet may be improved. Specifically, in the disposing step, the foaming adhesive sheet can be inserted smoothly into the gap between the first member and second member; or when the first member includes a hole or a groove, the second member can be inserted smoothly into the gap wherein the foaming adhesive sheet is already disposed in the hole or groove of the first member.

Here, the non-pressure-sensitive adhesive is generally used mainly to mean low pressure-sensitive adhesive force. In the present specification, being "non-pressure-sensitive adhesive" is referred to a condition that a rolled up foaming adhesive sheet may be easily unrolled without reluctance.

When the adhesive layer is practically non-pressure-sensitive adhesive, specifically, the tack of the adhesive layer is preferably 0 gf or more and less than 10 gf, may be 5 gf or less, and may be 2 gf or less. By the tack of the adhesive layer being in the range described above, the adhesive layer may be practically non-pressure-sensitive adhesive, so that a foaming adhesive sheet having excellent sliding property and blocking resistance, may be obtained.

Also, when the foaming adhesive sheet in the present embodiment includes the first adhesive layer and second adhesive layer, or when it includes the first adhesive layer, substrate and second adhesive layer in this order, both the first adhesive layer and second adhesive layer may be practically non-pressure-sensitive adhesive (tack free); or one of the first adhesive layer and second adhesive layer may be practically non-pressure-sensitive adhesive (tack free), and the other may be pressure-sensitive adhesive (tackiness).

When both the first adhesive layer and second adhesive layer are practically non-pressure-sensitive adhesive (tack free), the similar effect, as the case where the foaming adhesive sheet includes one adhesive layer and the adhesive layer is non-pressure-sensitive adhesive (tack free), can be obtained.

Meanwhile, when one of the first adhesive layer and second adhesive layer is practically non-pressure-sensitive adhesive (tack free), and the other is pressure-sensitive adhesive (tackiness), and, for example, when the first adhesive layer is practically non-pressure-sensitive adhesive (tack free), and the second adhesive layer is pressure-sensitive adhesive (tackiness), a second adhesive layer having good close adhesiveness to the second member can be obtained. Specifically, in the disposing step, when the second adhesive layer surface of the foaming adhesive sheet is adhered to the second member, and the second member, on which the foaming adhesive sheet is adhered, is inserted into the hole or groove of the first member, by the second adhesive layer having the tackiness, the close adhesiveness of the second adhesive layer with respect to the second member can be improved, since the second adhesive layer surface of the foaming adhesive sheet can be adhered to the second member by utilizing the pressure-sensitive adhesiveness of the second adhesive layer. As a result, when the second member, on which the foaming adhesive sheet is adhered, is inserted into the hole or groove of the first member, the peeling or displacement of the foaming adhesive sheet can be suppressed.

Also, in the above case, when the second adhesive layer has the pressure-sensitive adhesiveness, a second adhesive layer having good reworkability can be obtained. Therefore, for example, as described above, when the second adhesive layer surface of the foaming adhesive sheet is adhered to the second member by utilizing the pressure-sensitive adhesiveness of the second adhesive layer, the displacement of the foaming adhesive sheet can be corrected.

Also, in the above case, by the first adhesive layer being non-pressure-sensitive adhesive, a first adhesive layer having good sliding property can be obtained. As a result, for example, as described above, when the second member, on

which the foaming adhesive sheet is adhered, is inserted into the hole or groove of the first member, the second member, on which the foaming adhesive sheet is adhered, can be inserted smoothly so that the inserting property can be improved. As a result, the peeling or displacement of the foaming adhesive sheet can be prevented. Also, when aligning the first member and second member by moving the second member with the first member, the second member can be smoothly moved with respect to the first member under the situation wherein the second member is inserted into the hole or groove of the first member, so that the alignment can be carried out easily.

Also, in the above case, as described above, since the second adhesive layer has excellent close adhesiveness with respect to the second member, and since the first adhesive layer has excellent sliding property, the peeling or displacement of the foaming adhesive sheet can be suppressed. Therefore, it is possible to suppress the deterioration of the adhesion of the foaming adhesive sheet, after foamed and cured, due to peeling or displacement of the foaming adhesive sheet, and to reduce the variation in the adhesion strength of the foaming adhesive sheet, after foamed and cured, due to peeling or displacement of the foaming adhesive sheet.

Also, in the above case, by the second adhesive layer having the pressure-sensitive adhesiveness, for example, when the second adhesive layer is formed by a transfer method, the floating of the second adhesive layer can be suppressed. Further, as described below, when the second separator is disposed on the surface of the second adhesive layer that is opposite side to the first adhesive layer, by the second adhesive layer having pressure-sensitive adhesiveness, the second separator can be easily peeled off so that the workability can be improved.

Also, when the adhesive layer has the pressure-sensitive adhesiveness, for example, the fluidity when the resin component is softened tends to be high in the foaming and curing process of the adhesive layer, since resin component with low molecular weight is included in relatively large amount. Therefore, when the adhesive layer (foaming agent-including adhesive layer) is foamed and cured to form the foam layer, it is easier for bubbles to connect with each other, and the bubbles tend to grow larger. Therefore, when one of the first adhesive layer and second adhesive layer is practically non-pressure-sensitive adhesive (tack free) and the other is pressure-sensitive adhesive (tackiness), the method for producing a product in the present embodiment is useful.

When both the first adhesive layer and second adhesive layer are practically non-pressure-sensitive adhesive, specifically, the respective tacks of the first adhesive layer and second adhesive layer are preferably 0 gf or more and less than 10 gf, may be 5 gf or less, and may be 2 gf or less. By the tacks of the first adhesive layer and second adhesive layer being in the range described above, the first adhesive layer and second adhesive layer may be practically non-pressure-sensitive adhesive, so that a foaming adhesive sheet having excellent sliding property and blocking resistance, may be obtained.

Also, when the first adhesive layer is practically non-pressure-sensitive adhesive (tack free), and the second adhesive layer is pressure-sensitive adhesive (tackiness), specifically, the tack of the first adhesive layer is preferably 0 gf or more and less than 10 gf, and the tack of the second adhesive layer is preferably 10 gf or more and 400 gf or less.

In the above case, the tack of the first adhesive layer is preferably 0 gf or more and less than 10 gf, may be 5 gf or less, and may be 2 gf or less. By the tack of the first adhesive layer being in the range described above, the first adhesive layer may be practically non-pressure-sensitive adhesive, so that a foaming adhesive sheet having excellent sliding property and blocking resistance, may be obtained.

Also, in the above case, the tack of the second adhesive layer is preferably 10 gf or more, may be 30 gf or more, and may be 50 gf or more. If the tack of the second adhesive layer is too low, for example, the close adhesiveness between the second adhesive layer and the second member may be decreased when the second adhesive layer surface of the foaming adhesive sheet is adhered to the second member by utilizing the tack of the second adhesive layer; or when the second member on which the foaming adhesive sheet is adhered is inserted in the hole or groove of the first member, the adhesiveness between the first adhesive layer and second adhesive layer after being foamed and cured may be decreased or unevenness in the adhesive strength may be caused due to the peeling of the foaming adhesive sheet or the displacement of the foaming adhesive sheet caused by the adhesion defect between the second adhesive layer and second member. Also, the tack of the second adhesive layer is preferably 400 gf or less, may be 300 gf or less, and may be 200 gf or less. When the tack of the second adhesive layer is too high, the reworkability may be decreased, and for example, when the second adhesive layer surface of the foaming adhesive sheet is adhered to the second member utilizing the tack of the second adhesive layer, the correction of the displacement of the foaming adhesive sheet may be difficult.

Here, the tack of the adhesive layer is measured by a probe tack test. Specifically, a cylinder-shaped stainless steel probe with a diameter of 5 mm is pressed onto the surface of the adhesive layer of the foaming adhesive sheet under conditions of a load of 10.0 gf, a speed of 30 mm/minute and a temperature of 25°C, maintaining for 1.0 second, and then, peeled off at a speed of 30 mm/minute, and the load at the peeling is measured. This measurement is carried out five times and the average value is regarded as the tack. As the probe tack tester, for example, a tacking tester "TAC-II" from Rhesca Co., Ltd. may be used.

Examples of a manner for controlling the tack of the adhesive layer may include a method wherein the composition of the adhesive layer is adjusted. Specifically, in the adhesive layer including an epoxy resin and a curing

agent, the pressure-sensitive adhesiveness of the adhesive layer may be decreased by using an epoxy resin that is solid at ordinary temperature, and by using a curing agent that is solid at ordinary temperature. Meanwhile, in the adhesive layer including an epoxy resin and a curing agent, the pressure-sensitive adhesiveness of the adhesive layer tends to increase when an epoxy resin that is liquid at ordinary temperature is used, or a curing agent that is liquid at ordinary temperature is used. Also, in the adhesive layer including an epoxy resin and a curing agent, the pressure-sensitive adhesiveness of the adhesive layer may be decreased by including an epoxy resin with high softening temperature, or by including an epoxy resin with high weight average molecular weight. For example, the pressure-sensitive adhesiveness of the adhesive layer may be decreased by including a plurality types of epoxy resins differing in the softening temperature in the adhesive layer, that is, by including one epoxy resin, and another epoxy resin whose softening temperature is 25°C or more and higher by 10°C or more than the softening temperature of said one epoxy resin. Also, for example, the pressure-sensitive adhesiveness of the adhesive layer may be decreased by the adhesive layer including a plurality types of epoxy resins differing in the weight average molecular weight in the adhesive layer, that is, by the adhesive layer including one epoxy resin, and another epoxy resin whose weight average molecular weight is 370 or more and higher by 300 or more than the weight average molecular weight of said one epoxy resin. More specifically, as described above, in the adhesive layer including an epoxy resin and a curing agent, the pressure-sensitive adhesiveness of the adhesive layer may be decreased by including, as the epoxy resin, a first epoxy resin with low softening temperature and low molecular weight, and a second epoxy resin with high softening temperature and high molecular weight. Meanwhile, in the adhesive layer including an epoxy resin and a curing agent, the pressure-sensitive adhesiveness of the adhesive layer tends to be high when an epoxy resin with low softening temperature is included, or when an epoxy resin with low weight average molecular weight is included. Also, as described above, in the adhesive layer including an epoxy resin and a curing agent, the pressure-sensitive adhesiveness of the adhesive layer may be decreased by including an acrylic resin compatible with an epoxy resin. Also, the pressure-sensitive adhesiveness of the adhesive layer tends to be higher by adding a pressure-sensitive adhesiveness imparting resin (tackifier) to the adhesive layer. Incidentally, although the pressure-sensitive adhesiveness tends to be high when a curing agent that is liquid at ordinary temperature is used, it is preferable that the tack of the adhesive layer is adjusted by adjusting, for example, the properties or the types of the components other than the curing agent, such as epoxy resin, since the storage stability may be reduced.

Here, "pressure-sensitive adhesion" is a concept included in "adhesion". The pressure-sensitive adhesion is used as a meaning of a temporary adhesion phenomenon, whereas the adhesion is distinguished in some cases from a viewpoint that it is used as a meaning of a practically permanent adhesion phenomenon (Physical and Chemical Science Dictionary Fifth Edition, published by Iwanami Shoten, Publishers). "Pressure-sensitive adhesiveness" and "pressure-sensitive adhesive force" indicate a property to adhere by pressure sensing and the adhesive force at that time.

Incidentally, "the pressure-sensitive adhesiveness of an adhesive layer" and "the pressure-sensitive adhesive force of an adhesive layer" in the present descriptions indicate the pressure-sensitive adhesiveness and the pressure-sensitive adhesive force exhibited by the adhesive layer before curing, unless the circumstances are exceptional. Also, "the adhesiveness of an adhesive layer" and "the adhesive force of an adhesive layer" in the present descriptions indicate the adhesiveness and the adhesive force exhibited by the adhesive layer after cured, unless the circumstances are exceptional.

(b) Material of adhesive layer

The adhesive layer in the present embodiment includes a curable adhesive and a foaming agent.

Since the materials of the adhesive layer are similar to the content described in the section "A. Product" above, the descriptions herein will be omitted.

When the curable adhesive is an epoxy resin based adhesive, as described above, the curable adhesive preferably includes an epoxy resin that is liquid at ordinary temperature, as the epoxy resin. The method for producing a product in the present embodiment is useful when the curable adhesive includes the epoxy resin that is liquid at ordinary temperature. When the foaming adhesive sheet in the present embodiment includes the first adhesive layer and second adhesive layer, at least one of the first adhesive layer and second adhesive layer preferably includes the epoxy resin that is liquid at ordinary temperature, and it is more preferable that only one thereof includes the epoxy resin that is liquid at ordinary temperature. As described above, the method for producing a product in the present embodiment is useful in such cases.

The content of the epoxy resin that is liquid at ordinary temperature in the adhesive layer is similar to the content of the epoxy resin that is liquid at ordinary temperature in the adhesive composition used for the cured adhesive layer in the product described above.

For the epoxy resin based adhesive, the resin component in the adhesive layer refers to epoxy resins and acrylic resins. Optional components such as urethane resins are also included in the resin components in the adhesive layer. Also, when the curing agent is a phenolic resin, the curing agents such as phenolic resins are also included in the resin component in the adhesive layer.

As described above, when the curable adhesive is the epoxy resin based adhesive, and when the curable adhesive includes the first epoxy resin whose softening temperature is 50°C or more and epoxy equivalent is 5000 g/eq or less, and the second epoxy resin whose softening temperature is higher than the first epoxy resin and weight-average molecular weight is 20,000 or more, the content of the first epoxy resin, when the resin components included in the adhesive layer is regarded as 100 parts by mass, is, for example, 1 part by mass or more, may be 3 parts by mass or more, may be 5 parts by mass or more, may be 10 parts by mass or more, may be 15 parts by mass or more, and may be 25 parts by mass or more. When the content of the first epoxy resin is too low, the adhesiveness and the blocking resistance after foamed and cured may be deteriorated. Meanwhile, the content of the first epoxy resin, when the resin components included in the adhesive layer is regarded as 100 parts by mass is, for example, 90 parts by mass or less, may be 80 parts by mass or less, may be 70 parts by mass or less, may be 60 parts by mass or less, may be 50 parts by mass or less, and may be 40 parts by mass or less. When the content of the first epoxy resin is too high, the content of the second epoxy resin and the acrylic resin will be relatively low so that the non-pressure-sensitive adhesiveness, the blocking resistance, the close adhesiveness with respect to the substrate after foamed and cured, the crack resistance after foamed and cured, and the adhesiveness after foamed and cured may not be balanced.

Also, in the above case, the content of the second epoxy resin when the resin components included in the adhesive layer is regarded as 100 parts by mass is, for example, 10 parts by mass or more, may be 15 parts by mass or more, may be 20 parts by mass or more, may be 25 parts by mass or more, may be 30 parts by mass or more, may be 35 parts by mass or more, may be 40 parts by mass or more, and may be 45 parts by mass or more. When the content of the second epoxy resin is too low, the pressure-sensitive adhesiveness may be high, and the blocking resistance may be deteriorated. Meanwhile, the content of the second epoxy resin when the resin components included in the adhesive layer is regarded as 100 parts by mass is, for example, 90 parts by mass or less, may be 85 parts by mass or less, may be 80 parts by mass or less, and may be 75 parts by mass or less. When the content of the second epoxy resin is too high, the content of the first epoxy resin and the acrylic resin will be relatively low so that the non-pressure-sensitive adhesiveness, the blocking resistance, the close adhesiveness with respect to the substrate after foamed and cured, the crack resistance after foamed and cured, and the adhesiveness after foamed and cured may not be balanced.

The proportion of the first epoxy resin with respect to the total of the first epoxy resin and the second epoxy resin is, for example, 5% by mass or more, may be 10% by mass or more, may be 15% by mass or more, and may be 20% by mass or more. Meanwhile, the proportion of the first epoxy resin is, for example, 80% by mass or less, may be 75% by mass or less, and may be 60% by mass or less.

Also, the proportion of the total of the first epoxy resin and the second epoxy resin with respect to all the epoxy resins included in the adhesive layer is, for example, 50% by mass or more, may be 70% by mass or more, may be 90% by mass or more, and may be 100% by mass.

When the first adhesive layer is substantially non-pressure-sensitive adhesive and the second adhesive layer is pressure-sensitive adhesive, and when the curable adhesive is the epoxy resin based adhesive, as described above, the first adhesive layer preferably includes a first epoxy resin with softening temperature of 50°C or more and an epoxy equivalent of 5000 g/eq or less, and a second epoxy resin with softening temperature higher than the first epoxy resin and a weight-average molecular weight of 20,000 or more. Meanwhile, in the second adhesive layer, the epoxy resin that is liquid at ordinary temperature such as bisphenol A type epoxy resins and bisphenol F type epoxy resins; and the epoxy resins with low softening temperature are preferably used. This is because the use of these epoxy resins makes it easier to adjust the tack of the second adhesive layer within the predetermined range.

When the curable adhesive is the epoxy resin based adhesive, and when the adhesive layer further includes the acrylic resin that is compatible with the epoxy resin, the content of the acrylic resin, when the resin components included in the adhesive layer is regarded as 100 parts by mass is, for example, 1 part by mass or more, may be 3 parts by mass or more, may be 5 parts by mass or more, may be 7 parts by mass or more, and may be 10 parts by mass or more. When the content of the acrylic resin is too low, the close adhesiveness with respect to the substrate after foamed and cured, the crack resistance after foamed and cured, and the adhesiveness after foamed and cured may be deteriorated. Meanwhile, the content of the acrylic resin, when the resin component included in the adhesive layer is regarded as 100 parts by mass is, for example, 60 parts by mass or less, may be 50 parts by mass or less, may be 40 parts by mass or less, may be 35 parts by mass or less, and may be 30 parts by mass or less. When the content of the acrylic resin is too high, the content of the first epoxy resin and the second epoxy resin will be relatively low so that the non-pressure-sensitive adhesiveness, the blocking resistance, the close adhesiveness with respect to the substrate after foamed and cured, the crack resistance after foamed and cured, and the adhesiveness after foamed and cured may not be balanced. Also, when the content of the acrylic resin is too high, the strength of the film may be decreased.

Also, the content of the curing agent, when the resin components included in the adhesive layer is regarded as 100 parts by mass is, for example, 1 part by mass or more and 40 parts by mass or less. For example, when an imidazole based curing agent is used as a main component as the curing agent, the content of the curing agent, when the resin components included in the adhesive layer is regarded as 100 parts by mass is preferably, for example, 1 part by mass or more and 15 parts by mass or less. Meanwhile, when a phenol based curing agent is used as a main component as a curing

agent, the content of the curing agent, when the resin components included in the adhesive layer is regarded as 100 parts by mass is preferably, for example, 5 parts by mass or more and 40 parts by mass or less. Incidentally, the use of an imidazole based curing agent or a phenol based curing agent as a main component as the curing agent means that the mass proportion of the imidazole based curing agent or the phenol based curing agent is the highest in the curing agent.

The content of the foaming agent in the adhesive layer, with respect to 100 parts by mass of the resin components in the adhesive layer, is, for example, 0.5 parts by mass or more, may be 2 parts by mass or more, may be 3 parts by mass or more, may be 4 parts by mass or more, may be 5 parts by mass or more, may be 13 parts by mass or more, and may be 15 parts by mass or more. As described above, when the content of the foaming agent is high, the thickness of the adhesive layer after foamed and cured, that is, the thickness of the foam layer (cured adhesive layer) tends to increase. Therefore, the size of the bubble can be made relatively small with respect to the thickness of the foam layer (cured adhesive layer). Therefore, by making the content of the foaming agent in the range described above, large bubbles can be suppressed. Meanwhile, the content of the foaming agent in the adhesive layer, with respect to 100 parts by mass of the resin components in the adhesive layer, is, for example, 30 parts by mass or less, may be 25 parts by mass or less, and may be 20 parts by mass or less. When the content of the foaming agent is too much, since the content of the curable adhesive is relatively decreased, the adhesiveness after foamed and cured may be deteriorated.

At least one of the first adhesive layer and the second adhesive layer has only to include the foaming agent. Among the above, when the first adhesive layer is practically non-pressure-sensitive adhesive, and the second adhesive layer is pressure-sensitive adhesive, the first adhesive layer preferably includes the foaming agent. When the foaming agent is included, the surface roughness is increased, the coefficient of friction is decreased, and the sliding property is further improved. Particularly, it is preferable that both the first adhesive layer and second adhesive layer include the foaming agent. When both the first adhesive layer and second adhesive layer include the foaming agent, the adhesiveness of the first adhesive layer and second adhesive layer after they are foamed and cured can be improved.

The proportion of the total of the epoxy resin and the acrylic resin with respect to the resin components included in the adhesive layer is, for example, 70% by mass or more, may be 80% by mass or more, may be 90% by mass or more, and may be 100% by mass.

The content of the resin components included in the adhesive layer is, for example, 60% by mass or more, may be 70% by mass or more, may be 80% by mass or more, and may be 90% by mass or more.

(c) Constitution of adhesive layer

The adhesive layer is capable of foaming at foaming magnification of, for example, 1.5 times or more and 15 times or less. The foaming magnification may be, for example, 3.5 times or more, may be 4 times or more, and may be 4.5 times or more. Also, the foaming magnification may be, for example, 9 times or less, may be 8.5 times or less, and may be 8 times or less. When the foaming magnification is too low or too high, the adhesiveness after foamed and cured may be decreased.

Here, the foaming magnification may be determined by the following formula.

Foaming magnification (times) = adhesive layer thickness after foamed and cured/adhesive layer thickness before foamed and cured

The thickness of the adhesive layer is not particularly limited, and it is preferably average particle size of the foaming agent or more, for example, 10 μm or more, may be 15 μm or more, and may be 20 μm or more. When the adhesive layer is too thin, the close adhesiveness with respect to the substrate and the adhesiveness after foamed and cured may not be sufficiently obtained. Meanwhile, the thickness of the adhesive layer is, for example, 200 μm or less, may be 150 μm or less, and may be 100 μm or less. When the adhesive layer is too thick, the quality of the surface may be deteriorated.

The adhesive layer may be a continuous layer, and may be a discontinuous layer. Example of the discontinuous layer may include patterns such as stripes and dots. Also, the surface of the adhesive layer may have a concavo-convex shape such as emboss.

The adhesive layer may be formed, for example, by applying an adhesive composition including the curable adhesive and the foaming agent, for example, and removing a solvent. Examples of application method may include roll coating, reverse roll coating, transfer roll coating, gravure coating, gravure reverse coating, comma coating, rod coating, blade coating, bar coating, wire bar coating, die coating, lip coating, and dip coating.

The adhesive composition may or may not include a solvent. Incidentally, the solvent in the present descriptions is in a broad sense including not only a strict solvent (a solvent for dissolving a solute) but also a dispersion medium. Also, the solvent included in the adhesive composition is volatilized and removed when the adhesive composition is applied and dried to form an adhesive layer.

The adhesive composition may be obtained by mixing each of the above described components and kneading and dispersing them, if necessary. Examples of the mixing and dispersing methods may include common kneading dispersers such as twin roll mills, triple roll mills, pebble mills, trommels, Szegvari Attritors, high-speed impeller dispersers, high-speed stone mills, high-speed impact mills, Dispar, high-speed mixers, ribbon blenders, cokneaders, intensive

mixers, tumblers, blenders, dispersers, homogenizers, and ultrasonic dispersers.

(2) Substrate

The foaming adhesive sheet in the present embodiment may include a substrate between the first adhesive layer and second adhesive layer. Since the substrate is similar to the content described in the section of "A. Product" above, the descriptions herein will be omitted.

(3) Other constitution

(a) First intermediate layer and second intermediate layer

The foaming adhesive sheet in the present embodiment may include a first intermediate layer between the substrate and the first adhesive layer. Also, the foaming adhesive sheet in the present embodiment may include a second intermediate layer between the substrate and the second adhesive layer. Since the first intermediate layer and second intermediate layer are similar to the content described in the section of "A. Product" above, the descriptions herein will be omitted.

For example, in the foaming adhesive sheet 10 shown in FIG. 10, the first intermediate layer 13a is disposed between the substrate 12 and the first adhesive layer 1a, and the second intermediate layer 13b is disposed between the substrate 12 and the second adhesive layer 1b. Incidentally, in FIG. 10, although the foaming adhesive sheet 10 includes both first intermediate layer 13a and the second intermediate layer 13b, only either one may be included.

(b) Separator

When one adhesive layer is included, the foaming adhesive sheet in the present embodiment may include a separator on one surface or on both surfaces of the adhesive layer. Also, when the first adhesive layer and second adhesive layer are included, or when the first adhesive layer, substrate and second adhesive layer are included in this order, the foaming adhesive sheet in the present embodiment may include a first separator on the surface of the first adhesive layer that is opposite to the second adhesive layer, or may include a second separator on the surface of the second adhesive layer that is opposite to the first adhesive layer.

When the foaming adhesive sheet includes a separator, the foaming adhesive sheet is used after peeling the separator off from the foaming adhesive sheet, when the foaming adhesive sheet is disposed between the first member and the second member.

The separator is not particularly limited as long as it may be peeled off from the adhesive layer, and it may have a strength to the extent capable of protecting the adhesive layer. Examples of such separator may include releasing films and releasing papers. Also, the separator may have a single layer structure, and may have a multiple layer structure.

Examples of the separator having a single layer structure may include a fluorine resin based film.

Also, examples of the separator having a multiple layer structure may include a stacked body including a releasing layer on one surface or both surfaces of a substrate layer. Examples of the substrate layer may include resin films such as polypropylene, polyethylene, and polyethylene terephthalate; and paper such as high-quality paper, coated paper, and impregnated paper. The material of the releasing paper is not particularly limited as long as the material has releasing property, and examples may include silicone compounds, organic compounds modified silicone compounds, fluorine compounds, amino-alkyd compounds, melamine compounds, acrylic compounds, polyester compounds, and long-chain alkyl compounds. Any one of emulsion types, solvent types, and solventless types of these compounds may be used.

The first separator and second separator may be the same, and may be different. Among the above, when the first adhesive layer is practically non-pressure-sensitive adhesive, and the second adhesive layer is pressure-sensitive adhesive, it is preferable that the first separator has a heavy-to-peel property, and the second separator has a light-to-peel property. For example, after disposing the foaming adhesive sheet on the second member, when the second member, on which the foaming adhesive sheet is disposed, is inserted into the hole of the first member, the close adhesiveness between the second member and foaming adhesive sheet during the insertion, and the inserting property of the second member, on which the foaming adhesive sheet is disposed, can be improved by adhering the second adhesive layer surface of the foaming adhesive sheet to the second member, and making the first adhesive layer surface of the foaming adhesive sheet a front surface. In this case, since the second separator, among the first separator and second separator, is peeled off at first, the second separator can be easily peeled off than the first separator, when the first separator has a heavy-to-peel property and the second separator has a light-to-peel property.

Incidentally, the light-to-peel and heavy-to-peel refers to the magnitude of the force required to peel off the first separator or second separator from the first adhesive layer or second adhesive layer, and the peeling force for the light-to-peel is lower than that of the heavy-to-peel.

(4) Foaming adhesive sheet

The thickness of the foaming adhesive sheet in the present embodiment is, for example, 10 μm or more, and may be 20 μm or more. Meanwhile, the thickness of the foaming adhesive sheet is, for example, 1000 μm or less, and may be 200 μm or less.

The foaming adhesive sheet in the present embodiment preferably has excellent shape retainability. The shape retainability is preferably high. The bending moment based on JIS P8125-2:2017 corresponding to ISO 2493 is, for example, 0.1 gf•cm or more, and may be 1 gf•cm or more. Meanwhile, the bending moment is, for example, less than 40 gf•cm, and may be less than 30 gf•cm. Conventionally, in the foaming adhesive sheet, it has been a commonly used approach to increase the shape retainability and the inserting property into a narrow gap, by increasing the bending moment. In contrast to this, the inventors of the present disclosure have found out that, considering other properties, the bending moment is preferably in the range described above, since the shape retainability may be secured by contriving the shape, and since other problem may arise when the bending moment is high. When the bending moment is lower than the range described above, the retaining of the shape may be difficult even by a contriving such as a folding back. Also, when the bending moment is higher than the range described above, since the shape is reversed after a folding process, it is necessary to heat during the folding process, or to ruck a folding line. The sheet life duration may be deteriorated when it is heated, and the insulation property of the rucked portion may be deteriorated. In addition, in the foaming adhesive sheet in the present embodiment, the surface is not damaged even when it is inserted rapidly, by increasing the surface hardness.

The adhesiveness after foamed and cured of the foaming adhesive sheet in the present embodiment is preferably high. The shear strength (adhesive strength) based on JIS K6850:1999 corresponding to ISO 4587:1995 may be, for example, 1.50 MPa or more, may be 1.80 MPa or more, and may be 2.10 MPa or more at 23°C. Also, the shear strength (adhesive strength) may be, for example, 0.50 MPa or more, may be 0.75 MPa or more, and may be 1.00 MPa or more at 130°C. For example, in a high-strength acrylic foam pressure-sensitive adhesive tape not necessary to be heated, the shear strength (adhesive strength) is approximately 1 MPa or more and 2 MPa or less at ordinary temperature, and it is not heat resistant at 200°C. Therefore, when the shear strength (adhesive strength) at 23°C is in the range described above, it is superior in the strength. Also, when the shear strength (adhesive strength) at 130°C is in the range described above, it may be employed to the use applications such as those used in the vicinity of engines of vehicles, and those requiring the heat resistance equivalent thereto.

The foaming adhesive sheet in the present embodiment preferably has high electrical insulating property after foamed and cured. In the foaming adhesive sheet after foamed and cured, the dielectric breakdown voltage based on JIS C2107:2011 corresponding to IEC 60454-2 is preferably, for example, 3 kV or more, and more preferably 5 kV or more. By the dielectric breakdown voltage being in the range described above, it may be applied to anticorrosion applications or to copper wiring surroundings. Also, in the foaming adhesive sheet after foamed and cured, the thermal conductivity is preferably, for example, 0.1 W/mK or more, and more preferably 0.15 W/mK or more. By the thermal conductivity being in the range described above, the parts may be decreased in size, and the curing reaction during heating may be proceeded.

The method for producing a foaming adhesive sheet in the present embodiment is not particularly limited, and is appropriately selected according to the layer structure of the foaming adhesive sheet.

2. Disposing step

In the disposing step in the present embodiment, the foaming adhesive sheet is disposed between a first member and a second member.

The method for disposing the foaming adhesive sheet between the first member and the second member is appropriately selected according to the type of the first member and the second member.

Examples of the method may include a method wherein the foaming adhesive sheet is inserted between the first member and the second member; and a method wherein, after disposing the foaming adhesive sheet in a hole, groove and so on of the first member, the second member is inserted into the gap after disposing the foaming adhesive sheet in a hole, groove and so on of the first member. Also, for example, when the first member includes a hole or a groove, and the second member is disposed in the hole or groove of the first member, and when the first member and second member are fixed by adhesion, examples of the method may include a method wherein the second adhesive layer surface of the foaming adhesive sheet is adhered to the second member by utilizing the tackiness of the second adhesive layer of the foaming adhesive sheet, and then, the second member on which the foaming adhesive sheet is adhered is disposed in the hole or groove of the first member; and a method wherein the foaming adhesive sheet is disposed in a hole of a groove of the first member, the second adhesive layer surface of the foaming adhesive sheet is adhered to in the hole or groove of the first member by utilizing the tackiness of the second adhesive layer of the foaming adhesive sheet, and then, the second member is disposed in the hole or groove of the first member to which the foaming adhesive sheet is adhered.

3. Adhering step

In the adhering step in the present embodiment, the foaming agent-including adhesive layer of the foaming adhesive sheet is foamed and cured to form a foam layer, and the first member and the second member are adhered.

Also, in the adhering step in the present embodiment, the foaming and curing conditions are set so that, in a cross-sectional surface parallel to a thickness direction of the foam layer, the number of bubbles having a length, in the thickness direction of the foam layer, of more than or equal to a value obtained by subtracting 6 μm from the thickness of the foam layer, is less than 7 per 4 mm length in a direction perpendicular to the thickness direction of the foam layer. Among them, it is preferable that the foaming and curing conditions are set so that the number of the bubbles is 3 or less, more preferably 2 or less, further preferably 1 or less, and particularly preferably 0.

Examples of a method for foaming and curing the foaming adhesive sheet may include a heating and a light irradiation. Among them, the foaming agent-including adhesive layer of the foaming adhesive sheet is preferably foamed and cured by heating. The method by heating may be applied even when the first member and the second member are not transparent, such as a metal member.

The heating conditions are set so that the foaming and curing conditions are as described above. The heating conditions may be appropriately set according to, for example, the type of the curable adhesive or foaming agent included in the adhesive layer.

The heating temperature is preferably, for example, in a range of ± 40°C of the maximum foaming temperature of the foaming agent, more preferably in a range of ± 30°C of the maximum foaming temperature of the foaming agent, and further preferably in a range of ± 20°C of the maximum foaming temperature of the foaming agent. When the heating temperature is higher than the above range, the thickness of the adhesive layer during foaming cannot be maintained due to the shrinkage of the foaming agent, even when the resin component is cured, so that the size of the bubble tends to be relatively large with respect to the thickness of the foam layer (cured adhesive layer). Therefore, the adhesive strength may be deteriorated. Meanwhile, when the heating temperature is lower than the range, the expansion of the foaming agent may not be sufficient so that the adhesion strength may be reduced. In this case, the interfacial fracture between the cured adhesive layer and the first member or second member may easily occur.

Incidentally, when the adhesive layer includes a plurality of foaming agents, the heating temperature for at least one foaming agent has only to be in the above range. Above all, among the plurality of foaming agents, the heating temperature for the foaming agent included in the large amount is preferably in the above range. Particularly, the heating temperatures of all the plurality of foaming agents are preferably in the above range.

Also, the heating temperature is preferably, for example, more than or equal to a value obtained by subtracting 7°C from the maximum displacement extrapolation temperature of the foaming adhesive sheet, and less than or equal to a value obtained by adding 83°C to the maximum displacement extrapolation temperature of the foaming adhesive sheet; more preferably more than or equal to a value obtained by adding 15°C to the maximum displacement extrapolation temperature of the foaming adhesive sheet, and less than or equal to a value obtained by adding 63°C to the maximum displacement extrapolation temperature of the foaming adhesive sheet; and further preferably more than or equal to a value obtained by adding 23°C to the maximum displacement extrapolation temperature of the foaming adhesive sheet, and less than or equal to a value obtained by adding 43°C to the maximum displacement extrapolation temperature of the foaming adhesive sheet. When the heating temperature is higher than the above range, the thickness of the adhesive layer during foaming cannot be maintained due to the shrinkage of the foaming agent, even when the resin component is cured, so that the size of the bubble tends to be relatively large with respect to the thickness of the foam layer (cured adhesive layer). Therefore, the adhesive strength may be deteriorated. Meanwhile, when the heating temperature is lower than the range, the expansion of the foaming agent may not be sufficient so that the adhesion strength may be reduced. In this case, the interfacial fracture between the cured adhesive layer and the first member or second member may easily occur.

FIG.11 is a graph showing an example of a TMA curve for the foaming adhesive sheet, with temperature on the horizontal axis and the displacement on the vertical axis, when the displacement is measured while applying a compressive load and the temperature is raised at a predetermined rate by a thermomechanical analysis (TMA). The TMA curve for a foaming adhesive sheet, including a thermally expandable microcapsule as the foaming agent, usually has peaks due to expansion (foaming). In the TMA curve for a foaming adhesive sheet as shown in FIG. 11, the temperature at the intersection of the tangent line at the temperature exhibiting the maximum displacement and the tangent line at the local minimum temperature, of the TMA curve when the portion of the curve exhibiting the expansion behavior with the start of expansion (foaming) is differentiated, is regarded as the maximum displacement extrapolation temperature $T_{max1}$ of the foaming adhesive sheet. In the above case, the heating temperature is preferably in a predetermined range with respect to the maximum displacement extrapolation temperature $T_{max1}$.

Here, the thermomechanical analysis of the foaming adhesive sheet is carried out by the following method. Firstly, a foaming adhesive sheet is punched out to a size of φ 4 mm to prepare a sample. Then, the sample is disposed in an aluminum container of φ 5 mm so that the second adhesive layer surface of the foaming adhesive sheet is on the bottom surface side. Then, on top of the sample, an aluminum plate of φ 4 mm is disposed. Then, the temperature is raised at

20°C/minute from 25°C to 250°C using a thermomechanical analyzer, and the measurement is carried out in compression mode under a load of 10 mN. As for the thermomechanical analyzer, a thermomechanical analyzer TMA7100 from Hitachi High-Tech Science Corporation can be used.

Incidentally, the maximum displacement is the maximum value of the displacement in the TMA curve for the foaming adhesive sheet.

Also, in the TMA curve for a foaming adhesive sheet, the maximum displacement extrapolation temperature is regarded as the intersection of the tangent line at the temperature exhibiting the maximum displacement and the tangent line at the local minimum temperature, of the TMA curve when the portion of the curve exhibiting the expansion behavior with the start of expansion (foaming) is differentiated.

Specifically, the heating temperature may be 130°C or more and 200°C or less.

The heating time may be, for example, 3 minutes or more and 3 hours or less.

II. Second embodiment of method for producing product

The second embodiment of the method for producing a product in the present disclosure is a method for producing a product using a foaming adhesive sheet including at least an adhesive layer, wherein the adhesive layer is a foaming agent-including adhesive layer including a curable adhesive and a foaming agent; the method comprising a disposing step of disposing the foaming adhesive sheet between a first member and a second member; the method comprising an adhering step of foaming and curing the foaming agent-including adhesive layer of the foaming adhesive sheet to form a foam layer, and adhering the first member and the second member; and foaming and curing conditions in the adhering step are set so that, in a cross-sectional surface parallel to a thickness direction of the foam layer, the number of bubbles, having a length, in the thickness direction of the foam layer, of 100 μm or more, is less than 7 per 4 mm length in a direction perpendicular to the thickness direction of the foam layer.

FIGS. 5(a) to (b) and FIGS. 6(a) to (c) are process drawings illustrating examples of a method for producing a product in the present embodiment. Incidentally, since FIGS. 5(a) to (b) and FIGS. 6(a) to (c) are described in the section of the first embodiment above, the description herein is omitted.

In the method for producing a product in the present embodiment, as described in the section of the second embodiment of the product above, the adhesion defect can be suppressed, and the adhesiveness can be improved by setting the foaming and curing conditions in the adhering step so that, in a cross-sectional surface parallel to a thickness direction of the foam layer, the number of bubbles, having a length, in the thickness direction of the foam layer, of 100 μm or more, is a predetermined value or less per a predetermined length in a direction perpendicular to the thickness direction of the foam layer. Therefore, a highly trustable and highly durable product can be obtained.

The foaming adhesive sheet used for the method for producing a product in the present embodiment, and disposing step in the method for producing a produce in the present embodiment are similar to those of the first embodiment described above.

Also, in the adhering step in the present embodiment, the foaming and curing conditions are set so that, in a cross-sectional surface parallel to a thickness direction of the foam layer, the number of bubbles having a length, in the thickness direction of the foam layer, of 100 μm or more, is less than 7 per 4 mm length in a direction perpendicular to the thickness direction of the foam layer. Among them, it is preferable that the foaming and curing conditions are set so that the number of the bubbles is 3 or less, more preferably 2 or less, further preferably 1 or less, and particularly preferably 0.

The method for foaming and curing the foaming adhesive sheet and the heating conditions may be similar to the first embodiment described above.

C. Foaming adhesive sheet

The foaming adhesive sheet in the present disclosure includes two embodiments. Each embodiment is hereinafter described.

I. First embodiment of foaming adhesive sheet

The first embodiment of the foaming adhesive sheet in the present disclosure is a foaming adhesive sheet comprising at least an adhesive layer, wherein the adhesive layer is a foaming agent-including adhesive layer including a curable adhesive and a foaming agent; the curable adhesive is a thermosetting adhesive, and the foaming agent is a thermally expandable microcapsule; and when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, the number of bubbles, having a length, in the thickness direction of the foam layer, of more than or equal to a value obtained by subtracting 6 μm from the thickness of the foam layer, is less than 7 per 4 mm length in a direction perpendicular to the

thickness direction of the foam layer.

FIG. 7 is a schematic cross-sectional view exemplifying a foaming adhesive sheet in the present embodiment. The foaming adhesive sheet 10 shown in FIG. 7 includes an adhesive layer 1. The adhesive layer 1 is a foaming agent-including adhesive layer 5 including a curable adhesive and a foaming agent. The curable adhesive included in the foaming agent-including adhesive layer 5 (adhesive layer 1) is a thermosetting adhesive, and the foaming agent included in the foaming agent-including adhesive layer 5 (adhesive layer 1) is a thermally expandable microcapsule. Also, when the foaming agent-including adhesive layer 5 (adhesive layer 1) is foamed and cured to obtain a foam layer 15 by heating the foaming adhesive sheet 10 at a predetermined temperature for a predetermined time, as shown in FIG. 12 for example, in a cross-sectional surface parallel to a thickness direction D1 of the foam layer 15, the number of bubbles 31, having a length "s" of a predetermined range in the thickness direction D1 of the foam layer 15, with respect to the thickness "t" of the foam layer 15, is a predetermined value or less per a predetermined length L in a direction D2 perpendicular to the thickness direction D1 of the foam layer 15.

FIG. 8 is a schematic cross-sectional view showing another example of a foaming adhesive sheet in the present embodiment. The foaming adhesive sheet 10 shown in FIG. 9 includes a first adhesive layer 1a and a second adhesive layer 1b. The first adhesive layer 1a and second adhesive layer 1b are the foaming agent-including adhesive layers 5a, 5b including a curable adhesive and a foaming agent. The curable adhesive included in the foaming agent-including adhesive layers 5a, 5b (first adhesive layer 1a, second adhesive layer 1b) is a thermosetting adhesive, and the foaming agent included in the foaming agent-including adhesive layers 5a, 5b (first adhesive layer 1a, second adhesive layer 1b) is a thermally expandable microcapsule. When the foaming agent-including adhesive layers 5a, 5b (first adhesive layer 1a, second adhesive layer 1b) are respectively foamed and cured to obtain foam layers 15a, 15b by heating the foaming adhesive sheet 10 at a predetermined temperature for a predetermined time, as shown in FIG. 13 for example, in a cross-sectional surface parallel to a thickness direction D1 of the foam layer 15a, the number of bubbles among the bubbles 31, having a length "s" of a predetermined range in the thickness direction D1 of the foam layer 15a, with respect to the thickness t1 of the foam layer 15a, is a predetermined value or less per a predetermined length L in a direction D2 perpendicular to the thickness direction D1 of the foam layer 15a. Also, in a cross-sectional surface parallel to a thickness direction D1 of the foam layer 15b, the number of bubbles among the bubbles 31, having a length "s" of a predetermined range in the thickness direction D1 of the foam layer 15b, with respect to the thickness t2 of the foam layer 15b, is a predetermined value or less per a predetermined length L in a direction D2 perpendicular to the thickness direction D1 of the foam layer 15b.

FIG. 9 is a schematic cross-sectional view showing another example of a foaming adhesive sheet in the present embodiment. The foaming adhesive sheet 10 shown in FIG. 9 includes a first adhesive layer 1a, a substrate 12 and a second adhesive layer 1b in this order. Incidentally, FIG. 9 is similar to FIG. 8 described above, except that the substrate 12 is disposed between the first adhesive layer 1a and the second adhesive layer 1b.

Incidentally, in FIG. 8 and FIG. 9, although both the first adhesive layer 1a and the second adhesive layer 1b are the foaming agent-including adhesive layer 5a, 5b including a curable adhesive and a foaming agent, only either one of the first adhesive layer and the second adhesive layer may be the foaming agent-including adhesive layer including a curable adhesive and a foaming agent.

In the foaming adhesive sheet in the present embodiment, as described in the section of the first embodiment of the product above, in a case where the adhesive layer is the foaming agent-including adhesive layer, when a foam layer is formed by heating the foaming adhesive sheet at a predetermined temperature for a predetermined time to foam and cure the foaming agent-including adhesive layer, in a cross-sectional surface parallel to a thickness direction of the foam layer, an adhesive failure can be suppressed by making the number of bubbles having a length of a predetermined range, in the thickness direction of the foam layer, with respect to the thickness of the foam layer, is a predetermined value or less per a predetermined length in a direction perpendicular to the thickness direction of the foam layer. Therefore, the adhesiveness may be improved.

Since each component of the foaming adhesive sheet in the present embodiment is similar to the content described in the section of "A. Product" and "B. Method for producing product" above, the descriptions herein will be omitted.

In the present embodiment, when the foaming agent-including adhesive layer is foamed and cured to obtain a foam layer by heating the foaming adhesive sheet at a temperature $\pm$ 20°C of a maximum foaming temperature of the foaming agent, in a cross-sectional surface parallel to a thickness direction of the foam layer, the number of bubbles having a length, in the thickness direction of the foam layer, of more than or equal to a value obtained by subtracting 6 $\mu$m from the thickness of the foam layer, is less than 7 per 4 mm length in a direction perpendicular to the thickness direction of the foam layer. The number of the bubbles is preferably 3 or less, more preferably 2 or less, further preferably 1 or less, and particularly preferably 0.

Incidentally, when heating the foaming adhesive sheet, a supporting body including a smooth surface is used, and the foaming adhesive sheet is disposed on the smooth surface of the supporting body, and then heated. The supporting body is not particularly limited as long as it includes a smooth surface and has heat resistance, and for example,

glass substrates and resin substrates may be used.

Also, for the foaming adhesive sheet, the thickness direction of the foam layer is the direction perpendicular to the flat surface of the supporting body. Also, the direction perpendicular to the thickness direction of the foam layer is the flat surface direction of the supporting body.

The use application of the foaming adhesive sheet in the present embodiment is not particularly limited. For example, the foaming adhesive sheet in the present embodiment can be used for the production of the product described above.

II. Second embodiment of foaming adhesive sheet

The second embodiment of the foaming adhesive sheet in the present disclosure is a foaming adhesive sheet comprising at least an adhesive layer, wherein the adhesive layer is a foaming agent-including adhesive layer including a curable adhesive and a foaming agent; the curable adhesive is a thermosetting adhesive, and the foaming agent is a thermally expandable microcapsule; and when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, the number of bubbles, having a length, in the thickness direction of the foam layer, of 100 μm or more, is less than 7 per 4 mm length in a direction perpendicular to the thickness direction of the foam layer.

FIG. 7 to FIG. 9 are schematic cross-sectional views exemplifying a foaming adhesive sheet in the present embodiment. Incidentally, since FIG. 7 to FIG. 9 are described in the section of the first embodiment above, the description herein is omitted.

In the foaming adhesive sheet in the present embodiment, as described in the section of the second embodiment of the product above, in a case where the adhesive layer is the foaming agent-including adhesive layer, when a foam layer is formed by heating the foaming adhesive sheet at a predetermined temperature for a predetermined time to foam and cure the foaming agent-including adhesive layer, an adhesive failure can be suppressed by, in a cross-sectional surface parallel to a thickness direction of the foam layer, making the number of bubbles having a length of 100 μm or more in the thickness direction of the foam layer, a predetermined value or less per a predetermined length in a direction perpendicular to the thickness direction of the foam layer. Therefore, the adhesiveness may be improved.

Since each component of the foaming adhesive sheet in the present embodiment is similar to the content described in the section of "A. Product" and "B. Method for producing product" above, the descriptions herein will be omitted.

In the present embodiment, when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, the number of bubbles having a length, in the thickness direction of the foam layer, of 100 μm or more, is less than 7 per 4 mm length in a direction perpendicular to the thickness direction of the foam layer. The number of the bubbles is preferably 3 or less, more preferably 2 or less, further preferably 1 or less, and particularly preferably 0.

Incidentally, when heating the foaming adhesive sheet, the foaming adhesive sheet may be disposed on one surface of a supporting body, and then heated. The supporting body may be similar to the first embodiment described above.

D. Adhesive composition

The adhesive composition in the present disclosure includes two embodiments. Each embodiment is hereinafter described.

I. First embodiment of adhesive composition

The first embodiment of the adhesive composition in the present disclosure is an adhesive composition comprising a curable adhesive and a foaming agent, wherein the curable adhesive is a thermosetting adhesive, and the foaming agent is a thermally expandable microcapsule; and when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, the number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

In the adhesive composition in the present embodiment, as described in the section of the first embodiment of the

product above, when a foam layer is formed by coating one surface of a supporting body with the adhesive composition in a predetermined thickness, and heating a coating film of the adhesive composition, at a predetermined temperature for a predetermined time to foam and cure the coating film, an adhesive failure can be suppressed by, in a cross-sectional surface parallel to a thickness direction of the foam layer, making the number of bubbles having a length of a predetermined range, in the thickness direction of the foam layer, a predetermined value or less per a predetermined length in a direction perpendicular to the thickness direction of the foam layer. Therefore, the adhesiveness may be improved.

Since each component of the adhesive composition in the present embodiment is similar to the content described in the section of "A. Product" and "B. Method for producing product" above, the descriptions herein will be omitted.

In the present embodiment, when a foam layer is formed by coating one surface of a supporting body with the adhesive composition in a thickness of 45 μm, and heating a coating film of the adhesive composition, at a temperature ± 20°C of a maximum foaming temperature of the foaming agent, for 15 minutes to foam and cure the coating film, in a cross-sectional surface parallel to a thickness direction of the foam layer, the number of bubbles having a length, in the thickness direction of the foam layer, of more than or equal to a value obtained by subtracting 6 μm from the thickness of the foam layer, is less than 7 per 4 mm length in a direction perpendicular to the thickness direction of the foam layer. The number of the bubbles is preferably 3 or less, more preferably 2 or less, further preferably 1 or less, and particularly preferably 0.

Incidentally, when coating one surface of the supporting body with the adhesive composition, a supporting body including a smooth surface is used, and the smooth surface of the supporting body is coated with the adhesive composition. The supporting body is not particularly limited as long as it includes a smooth surface and has heat resistance, and for example, glass substrates and resin substrates may be used.

Also, for the adhesive composition, the thickness direction of the foam layer is the direction perpendicular to the flat surface of the supporting body. Also, the direction perpendicular to the thickness direction of the foam layer is the flat surface direction of the supporting body.

II. Second embodiment of adhesive composition

The second embodiment of the adhesive composition in the present disclosure is an adhesive composition comprising a curable adhesive and a foaming agent, wherein the curable adhesive is a thermosetting adhesive, and the foaming agent is a thermally expandable microcapsule; and when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, the number of bubbles, having a length, in the thickness direction of the foam layer, of 100 μm or more, is less than 7 per 4 mm length in a direction perpendicular to the thickness direction of the foam layer.

In the adhesive composition in the present embodiment, as described in the section of the second embodiment of the product above, when a foam layer is formed by coating one surface of a supporting body with the adhesive composition in a predetermined thickness, and heating a coating film of the adhesive composition, at a predetermined temperature for a predetermined time to foam and cure the coating film, an adhesive failure can be suppressed by, in a cross-sectional surface parallel to a thickness direction of the foam layer, making the number of bubbles having a length, in the thickness direction of the foam layer, of 100 μm or more, is a predetermined value or less per a predetermined length in a direction perpendicular to the thickness direction of the foam layer. Therefore, the adhesiveness may be improved.

Since each component of the adhesive composition in the present embodiment is similar to the content described in the section of "A. Product" and "B. Method for producing product" above, the descriptions herein will be omitted.

In the present embodiment, when a foam layer is formed by coating one surface of a supporting body with the adhesive composition in a thickness of 45 μm, and heating a coating film of the adhesive composition, at a temperature ± 20°C of a maximum foaming temperature of the foaming agent, for 15 minutes to foam and cure the coating film, in a cross-sectional surface parallel to a thickness direction of the foam layer, the number of bubbles having a length, in the thickness direction of the foam layer, of 100 μm or more, is less than 7 per 4 mm length in a direction perpendicular to the thickness direction of the foam layer. The number of the bubbles is preferably 3 or less, more preferably 2 or less, further preferably 1 or less, and particularly preferably 0.

The supporting body may be similar to the first embodiment described above.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

Examples

[Examples 1 to 5 and Comparative Examples 1 to 2]

First adhesive compositions 1 to 7 and second adhesive compositions 1 to 7 having the compositions shown in Table 1 below were produced using the following materials.

- Acrylic resin: PMMA-PBuA-PMMA (partially acrylamide group), Tg: -20°C, 120°C, Mw: 150,000
- Epoxy resin A: bisphenol A novolac type, solid at ordinary temperature, softening temperature: 70°C, epoxy equivalent: 210 g/eq, Mw: 1300, melt viscosity at 150°C: 0.5 Pa•s
- Epoxy resin B: BPA phenoxy type, solid at ordinary temperature, softening temperature: 110°C, epoxy equivalent: 8000 g/eq, Mw: 50,000
- Epoxy resin C: bisphenol A type, liquid at ordinary temperature, epoxy equivalent: 184 to 194 g/eq
- Epoxy resin D: diaminodiphenyl methane type, high viscosity liquid, epoxy equivalent: 110 to 130 g/eq
- Epoxy resin E: silicone modified, solid at ordinary temperature, epoxy equivalent: 1200 g/mol

  Epoxy resins A, B, E are solid at ordinary temperature, and epoxy resins C, D are liquid at ordinary temperature.
- Curing agent A: phenol-formaldehyde polycondensate, softening temperature: 80°C, hydroxyl equivalent: 104 g/mol
- Curing agent B: $\alpha$-(hydroxy (or dihydroxy)phenylmethyl)-w-hydropoly[biphenyl-4,4'-diylmethylene(hydroxy (or dihydroxy)phenylenemethylene)]
- Curing catalyst: 2-phenyl-4,5-dihydroxymethylimidazole, average particle size: 3 $\mu$m, melting point: 230°C, reaction start temperature: 145°C to 155°C, active region: 155°C to 173°C (2PHZ-PW from Shikoku Chemicals Corporation)
- Silane coupling agent: 3-glycidoxypropyltrimethoxysilane
- Foaming agent A: thermally expandable microcapsule, average particle size of 10 $\mu$m to 16 $\mu$m, expansion start temperature of 123°C to 133°C, maximum expansion temperature of 168°C to 178°C, core: hydrocarbon, shell: thermoplastic polymer
- Foaming agent B: thermally expandable microcapsule, average particle size of 18 $\mu$m to 24 $\mu$m, expansion start temperature of 120°C to 130°C, maximum expansion temperature of 175°C to 190°C, core: hydrocarbon, shell: thermoplastic polymer
- Foaming agent C: thermally expandable microcapsule, average particle size of 18 $\mu$m to 24 $\mu$m, expansion start temperature of 123°C to 133°C, maximum expansion temperature of 180°C to 195°C, core: hydrocarbon, shell: thermoplastic polymer
- Solvent: methyl ethyl ketone

[Table 1]

| Composition (pts.mass) | Comp. Ex. 1 | | Ex. 1 | | Ex. 2 | | Comp. Ex. 2 | | Ex. 3 | | Ex. 4 | | Ex. 5 | |
|---|---|---|---|---|---|---|---|---|---|---|---|---|---|---|
| | 1st adhes comp 1 | 2nd adhes comp 1 | 1st adhes comp 2 | 2nd adhes comp 2 | 1st adhes comp 3 | 2nd adhes comp 3 | 1st adhes comp 4 | 2nd adhes comp 4 | 1st adhes comp 5 | 2nd adhes comp 5 | 1st adhes comp 6 | 2nd adhes comp 6 | 1st adhes comp 7 | 2nd adhes comp 7 |
| Acrylic resin | 13 | 40 | 13 | 40 | 13 | 40 | 13 | 40 | 13 | 40 | 13 | 40 | 13 | 40 |
| Epoxy resin A | 40 | | 40 | | 40 | | 40 | | 40 | | 40 | | 40 | |
| Epoxy resin B | 42 | | 42 | | 42 | | 42 | | 42 | | 42 | | 42 | |
| Epoxy resin C | | 45 | | | | 45 | | 45 | | 45 | | 45 | | 45 |
| Epoxy resin D | | 65 | | 65 | | | | 65 | | 65 | | 65 | | 65 |
| Epoxy resin E | | 20 | | 20 | | 20 | | 20 | | 20 | | 20 | | 20 |
| Silane cplg agt | | 2 | | 2 | | 2 | | 2 | | 2 | | 2 | | 2 |
| Curing agent A | | 6 | | 6 | | 6 | | 6 | | 6 | | 6 | | 6 |
| Curing agent B | 6 | | 6 | | 6 | | 6 | | 6 | | 6 | | 6 | |
| Curing catalyst | 8 | 10 | 8 | 10 | 8 | 10 | 8 | 10 | 8 | 10 | 8 | 10 | 8 | 10 |
| Solvent | 150 | 114 | 150 | 114 | 150 | 114 | 150 | 114 | 150 | 114 | 150 | 114 | 150 | 114 |
| Foaming agt A | 13.5 | 20.0 | 13.5 | 20.0 | 13.5 | 20.0 | 12.1 | 20.9 | 17.7 | 30.6 | | | | |
| Foaming agt B | | | | | | | | | | | 17.7 | 30.6 | | |
| Foaming agt C | | | | | | | | | | | | | 17.7 | 30.6 |

Using a release film (PET separator PET50×1-J2 from Nippa Co., Ltd., thickness: 50 μm) as a separator, a second adhesive composition was applied to the release-treated surface of the release film, using an applicator so that a thickness after applied and cured was 45 μm. Thereafter, it was dried for 3 minutes at 100°C in an oven to form a second adhesive layer.

As a substrate, polyethylene naphthalate (PEN film, Teonex Q51 from Toyobo Film Solutions, thickness: 25 μm) was used. The first adhesive composition was applied, using an applicator so that a thickness after applied and cured was 45 μm. Thereafter, it was dried for 3 minutes at 100°C in an oven to form a first adhesive layer.

Then, on the substrate surface of the stacked body including the substrate and the first adhesive layer, the second adhesive layer surface of the stacked body including the separator and the second adhesive layer was laminated. Thereby obtained a foaming adhesive sheet wherein the first adhesive layer, substrate, second adhesive layer and separator were disposed in this order.

[Evaluation]

(1) Adhesiveness

As shown in FIGS. 14(a) and (b), two metal plates 41 (cold-rolled steel plate SPCC-SD) with thickness of 1.6 mm, width of 25 mm, length of 100 mm were prepared. Spacers 42 were disposed with a predetermined interval on one tip end of one of the metal plates 41. The thickness of the spacer 42 was approximately 370 μm (the thickness of two Kapton tapes P-221 from Nitto Denko Corporation and one fluorine resin pressure-sensitive adhesive tape 8410 from Teraoka Seisakusho Co., Ltd. stacked together). Also, the foaming adhesive sheet was cut into a size of 12.5 mm × 25 mm. When the foaming adhesive sheet includes a separator, the separator was peeled off. Then, the foaming adhesive sheet 10 was disposed between the spacers 42, the other metal plate 41 was disposed so that one tip end overlapped, and fixed with a clip to obtain a test piece. Then, the test piece was placed in a hot oven, the temperature was increased from the room temperature to a predetermined temperature in 13 minutes, and the temperature was maintained for 20 minutes to foam and cure the first adhesive layer and second adhesive layer of the foaming adhesive sheet 10. On this occasion, the heating temperatures were 150°C, 160°C, 170°C, 180°C, 190°C and 200°C.

The shear strength (adhesive strength) of the heated test piece was measured by a tensile tester Tensilon RTF1350 (from A & D Company, Ltd.) according to JIS K6850:1999. The measurement conditions were tensile speed of 10 mm/minute, and temperature of 23°C. Table 2 and Tables 3 show the heating temperature and adhesive strength at which the adhesive strength was the highest among the adhesive strength at each heating temperature.

(2) Observation of bubbles

The test piece was produced by adhering the first adhesive layer surface of the foaming adhesive sheet onto a glass substrate so as to protrude approximately 1 mm. The test piece was disposed in a hot oven, the temperature was increased from the room temperature to a predetermined temperature in 13 minutes, and the temperature was maintained for 15 minutes to foam and cure the first adhesive layer and second adhesive layer of the foaming adhesive sheet 10, an adhesive sheet including a first cured adhesive layer, a substrate and a second cured adhesive layer, in this order, was obtained. At this time, the heating temperature was set to the heating temperature at which the adhesive strength was the highest among the adhesive strength at each heating temperature, in the measurement of the adhesive strength.

The part of the adhesive sheet that protrudes from the edge surface of the glass substrate was cut along the edge portion of the glass substrate with a trimming blade so that the cross-sectional surface can be observed clearly. The test piece was fixed so that the cut cross-sectional surface can be observed vertically, and the bubbles were observed with an optical microscope (digital microscope VHX-2000 from Keyence Corporation). Then, for each cured adhesive layer, the number of bubbles, having a length of more than or equal to a value obtained by subtracting 6 μm from the thickness of the cured adhesive layer (foam layer) was counted in a field of view of 4 mm square. The average value of the number of bubbles at three randomly selected locations was regarded as the number of bubbles.

[Table 2]

| | Foaming agent | | | | Epoxy resin liquid at ordinary temp | Heat temp (°C) | Adhesive strength (MPa) | 1st cured adhesive layer | | 2nd cured adhesive layer | |
|---|---|---|---|---|---|---|---|---|---|---|---|
| | Type | Max foam temp (°C) | Content per 100 pts. mass of resin comp (pts. mass) | | Content per 100 pts. mass of resin comp (pts. mass) | | | | | | |
| | | | 1st adhes layer | 2nd adhes layer | 2nd adhes layer | | | Thk (μm) | Bubble (num) | Thk (μm) | Bubble (num) |
| Comp. Ex. 1 | Foam agt A | 168~ 178 | 13.4 | 11.4 | 62.5 | 185 | 2.6 (1st adhes layer side) | 430 | 0 | 141 | 7 |
| Ex. 1 | Foam agt A | 168~ 178 | 13.4 | 15.3 | 49.6 | 185 | 3.9 (1st adhes layer side) | 425 | 0 | 219 | 0 |
| Ex. 2 | Foam agt A | 168~ 178 | 13.4 | 18.0 | 40.5 | 185 | 3.6 (2nd adhes layer side) | 273 | 0 | 265 | 0 |

[Table 3]

| | Foaming agent | | | | Heat temp (°C) | Adhesive strength (MPa) | 1st cured adhesive layer | | 2nd cured adhesive layer | |
|---|---|---|---|---|---|---|---|---|---|---|
| | Type | Max foam temp (°C) | Content per 100 pts. mass of resin comp (pts. mass) | | | | | | | |
| | | | 1st adhes layer | 2nd adhes layer | | | Thk (μm) | Bubble (num) | Thk (μm) | Bubble (num) |
| Comp. Ex. 2 | Foam agt A | 168~ 178 | 12.0 | 11.9 | 180 | 2.2 (1st adhes layer side) | 605 | 0 | 52 | 7 |
| Ex. 3 | Foam agt A | 168~ 178 | 17.6 | 17.4 | 180 | 2.8 (1st adhes layer side) | 302 | 0 | 295 | 3 |
| Ex. 4 | Foam agt B | 175~ 190 | 17.6 | 17.4 | 160 | 2.9 (2nd adhes layer side) | 352 | 0 | 356 | 2 |
| Ex. 5 | Foam agt C | 180~ 195 | 17.6 | 17.4 | 160 | 2.4 (2nd adhes layer side) | 355 | 0 | 347 | 2 |

In Examples 1 to 5, when the first adhesive layer and second adhesive layer of the foaming adhesive sheet were foamed and cured respectively to form a first cured adhesive layer and second cured adhesive layer, the number of the predetermined bubbles per the predetermined length, in the first cured adhesive layer and second cured adhesive layer,

was less than 7, particularly, 3 or less, and the adhesion was good. Meanwhile, in Comparative Examples 1 to 3, when the first adhesive layer and second adhesive layer of the foaming adhesive sheet were foamed and cured respectively to form the first cured adhesive layer and second cured adhesive layer, the number of the predetermined bubbles per the predetermined length, in the first cured adhesive layer and second cured adhesive layer, was large, and the adhesion was inferior.

In the present disclosure, for example, the following inventions are provided.

[1] A product comprising a first member, a second member and an adhesive member disposed between the first member and the second member, wherein

the adhesive member includes at least a cured adhesive layer;
the cured adhesive layer is a foam layer including a foamed and cured product of an adhesive composition including a curable adhesive and a foaming agent;
the curable adhesive is a thermosetting adhesive, and the foaming agent is a thermally expandable microcapsule; and
in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

[2] A product comprising a first member, a second member and an adhesive member disposed between the first member and the second member, wherein

the adhesive member includes at least a cured adhesive layer;
the cured adhesive layer is a foam layer including a foamed and cured product of an adhesive composition including a curable adhesive and a foaming agent;
the curable adhesive is a thermosetting adhesive, and the foaming agent is a thermally expandable microcapsule; and
in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

[3] The product according to [1] or [2], wherein the adhesive member includes a first cured adhesive layer and a second cured adhesive layer; and
at least one of the first cured adhesive layer and the second cured adhesive layer is the foam layer.
[4] The product according to [3], wherein the first cured adhesive layer and the second cured adhesive layer are the foam layers.
[5] The product according to any one of [1] to [4], wherein the curable adhesive is an epoxy resin based adhesive; the curable adhesive includes an epoxy resin that is liquid at ordinary temperature; a content of the epoxy resin that is liquid at ordinary temperature in the adhesive composition, with respect to 100 parts by mass of resin components in the adhesive composition, is 60 parts by mass or less.
[6] The product according to any one of [1] to [5], wherein a content of the foaming agent in the adhesive composition, with respect to 100 parts by mass of resin components in the adhesive composition, is 13 parts by mass or more and 30 parts by mass or less.
[7] The product according to any one of [1] to [6], wherein a maximum foaming temperature of the foaming agent is 175°C or more and 220°C or less.
[8] A method for producing a product using a foaming adhesive sheet including at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule;
the method comprising a disposing step of disposing the foaming adhesive sheet between a first member and a second member;
the method comprising an adhering step of foaming and curing the foaming agent-including adhesive layer of the foaming adhesive sheet to form a foam layer, and adhering the first member and the second member; and
foaming and curing conditions in the adhering step are set so that, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

[9] A method for producing a product using a foaming adhesive sheet including at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule;
the method comprising a disposing step of disposing the foaming adhesive sheet between a first member and a second member;
the method comprising an adhering step of foaming and curing the foaming agent-including adhesive layer of the foaming adhesive sheet to form a foam layer, and adhering the first member and the second member; and
foaming and curing conditions in the adhering step are set so that, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

[10] The method for producing a product according to [8] or [9], wherein the foaming adhesive sheet includes a first adhesive layer and a second adhesive layer; and
at least one of the first adhesive layer and the second adhesive layer is the foaming agent-including adhesive layer.
[11] The method for producing a product according to any one of [8] to [10], wherein a heating temperature in the adhering step is in ± 20°C of a maximum foaming temperature of the foaming agent.
[12] The method for producing a product according to any one of [8] to [11], wherein the curable adhesive is an epoxy resin based adhesive; the curable adhesive includes an epoxy resin that is liquid at ordinary temperature; and a content of the epoxy resin that is liquid at ordinary temperature in the adhesive layer, with respect to 100 parts by mass of resin components in the adhesive layer, is 60 parts by mass or less.
[13] The method for producing a product according to any one of [8] to [12], wherein a content of the foaming agent in the adhesive layer, with respect to 100 parts by mass of resin components in the adhesive layer, is 13 parts by mass or more and 30 parts by mass or less.
[14] The method for producing a product according to any one of [8] to [13], wherein a maximum foaming temperature of the foaming agent is 175°C or more and 220°C or less.
[15] A foaming adhesive sheet comprising at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule; and
when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

[16] A foaming adhesive sheet comprising at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule; and
when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

[17] The foaming adhesive sheet according to [15] or [16], including a first adhesive layer and a second adhesive layer; and
at least one of the first adhesive layer and the second adhesive layer is the foaming agent-including adhesive layer.
[18] The foaming adhesive sheet according to [17], wherein the first adhesive layer and the second adhesive layer are the foaming agent-including adhesive layers.
[19] The foaming adhesive sheet according to [17] or [18], wherein a tack of the first adhesive layer is 0 gf or more and less than 10 gf, and a tack of the second adhesive layer is 10 gf or more and 400 gf or less.
[20] The foaming adhesive sheet according to any one of [15] to [19], wherein the curable adhesive is an epoxy resin

based adhesive; the curable adhesive includes an epoxy resin that is liquid at ordinary temperature; a content of the epoxy resin that is liquid at ordinary temperature in the adhesive layer, with respect to 100 parts by mass of resin components in the adhesive layer, is 60 parts by mass or less.

[21] The foaming adhesive sheet according to any one of [15] to [20], wherein a content of the foaming agent in the adhesive layer, with respect to 100 parts by mass of resin components in the adhesive layer, is 13 parts by mass or more and 30 parts by mass or less.

[22] The foaming adhesive sheet according to any one of [15] to [21], wherein a maximum foaming temperature of the foaming agent is 175°C or more and 220°C or less.

[23] An adhesive composition comprising a curable adhesive and a foaming agent, wherein

the curable adhesive is a thermosetting adhesive, and the foaming agent is a thermally expandable microcapsule; and

when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

[24] An adhesive composition comprising a curable adhesive and a foaming agent, wherein

the curable adhesive is a thermosetting adhesive, and the foaming agent is a thermally expandable microcapsule; and

when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

[25] The adhesive composition according to [23] or [24], wherein the curable adhesive is an epoxy resin based adhesive; the curable adhesive includes an epoxy resin that is liquid at ordinary temperature; a content of the epoxy resin that is liquid at ordinary temperature in the adhesive composition, with respect to 100 parts by mass of resin components in the adhesive composition, is 60 parts by mass or less.

[26] The adhesive composition according to any one of [23] to [25], wherein a content of the foaming agent in the adhesive composition, with respect to 100 parts by mass of resin components in the adhesive composition, is 13 parts by mass or more and 30 parts by mass or less.

[27] The adhesive composition according to any one of [23] to [26], wherein a maximum foaming temperature of the foaming agent is 175°C or more and 220°C or less.

Reference Signs List

1: adhesive layer
1a: first adhesive layer
1b: second adhesive layer
5, 5a, 5b, 15, 15a, 15b: foam layer
11: cured adhesive layer
11a: first cured adhesive layer
11b: second cured adhesive layer
12: substrate
13a: first intermediate layer
13b: second intermediate layer
10: foaming adhesive sheet
20a: first member
20b: second member

30: adhesive member
100: product

## Claims

**1.** A product comprising a first member, a second member and an adhesive member disposed between the first member and the second member, wherein

the adhesive member includes at least a cured adhesive layer;
the cured adhesive layer is a foam layer including a foamed and cured product of an adhesive composition including a curable adhesive and a foaming agent;
the curable adhesive is a thermosetting adhesive, and the foaming agent is a thermally expandable microcapsule; and
in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

**2.** A product comprising a first member, a second member and an adhesive member disposed between the first member and the second member, wherein

the adhesive member includes at least a cured adhesive layer;
the cured adhesive layer is a foam layer including a foamed and cured product of an adhesive composition including a curable adhesive and a foaming agent;
the curable adhesive is a thermosetting adhesive, and the foaming agent is a thermally expandable microcapsule; and
in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

**3.** The product according to claim 1 or 2, wherein the adhesive member includes a first cured adhesive layer and a second cured adhesive layer; and
at least one of the first cured adhesive layer and the second cured adhesive layer is the foam layer.

**4.** The product according to claim 3, wherein the first cured adhesive layer and the second cured adhesive layer are the foam layers.

**5.** The product according to claim 1 or 2, wherein the curable adhesive is an epoxy resin based adhesive; the curable adhesive includes an epoxy resin that is liquid at ordinary temperature; a content of the epoxy resin that is liquid at ordinary temperature in the adhesive composition, with respect to 100 parts by mass of resin components in the adhesive composition, is 60 parts by mass or less.

**6.** The product according to claim 1 or 2, wherein a content of the foaming agent in the adhesive composition, with respect to 100 parts by mass of resin components in the adhesive composition, is 13 parts by mass or more and 30 parts by mass or less.

**7.** The product according to claim 1 or 2, wherein a maximum foaming temperature of the foaming agent is 175°C or more and 220°C or less.

**8.** A method for producing a product using a foaming adhesive sheet including at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule;
the method comprising a disposing step of disposing the foaming adhesive sheet between a first member and a second member;
the method comprising an adhering step of foaming and curing the foaming agent-including adhesive layer of the foaming adhesive sheet to form a foam layer, and adhering the first member and the second member; and

foaming and curing conditions in the adhering step are set so that, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

**9.** A method for producing a product using a foaming adhesive sheet including at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule;
the method comprising a disposing step of disposing the foaming adhesive sheet between a first member and a second member;
the method comprising an adhering step of foaming and curing the foaming agent-including adhesive layer of the foaming adhesive sheet to form a foam layer, and adhering the first member and the second member; and
foaming and curing conditions in the adhering step are set so that, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

**10.** The method for producing a product according to claim 8 or 9, wherein the foaming adhesive sheet includes a first adhesive layer and a second adhesive layer; and
at least one of the first adhesive layer and the second adhesive layer is the foaming agent-including adhesive layer.

**11.** The method for producing a product according to claim 8 or 9, wherein a heating temperature in the adhering step is in ± 20°C of a maximum foaming temperature of the foaming agent.

**12.** The method for producing a product according to claim 8 or 9, wherein the curable adhesive is an epoxy resin based adhesive; the curable adhesive includes an epoxy resin that is liquid at ordinary temperature; and a content of the epoxy resin that is liquid at ordinary temperature in the adhesive layer, with respect to 100 parts by mass of resin components in the adhesive layer, is 60 parts by mass or less.

**13.** The method for producing a product according to claim 8 or 9, wherein a content of the foaming agent in the adhesive layer, with respect to 100 parts by mass of resin components in the adhesive layer, is 13 parts by mass or more and 30 parts by mass or less.

**14.** The method for producing a product according to claim 8 or 9, wherein a maximum foaming temperature of the foaming agent is 175°C or more and 220°C or less.

**15.** A foaming adhesive sheet comprising at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule; and
when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

**16.** A foaming adhesive sheet comprising at least an adhesive layer, wherein

the adhesive layer is a foaming agent-including adhesive layer including a curable adhesive and a foaming agent;
the curable adhesive is a thermosetting adhesive, and the foaming agent is a thermally expandable microcapsule; and
when the foaming agent-including adhesive layer is foamed and cured to obtain a foam layer by heating the foaming adhesive sheet at a temperature ± 20°C of a maximum foaming temperature of the foaming agent for 15 minutes, in a cross-sectional surface parallel to a thickness direction of the foam layer, number of bubbles, having a length, in the thickness direction of the foam layer, of 100 μm or more, is less than 7 per 4 mm length in a direction

perpendicular to the thickness direction of the foam layer.

**17.** The foaming adhesive sheet according to claim 15 or 16, including a first adhesive layer and a second adhesive layer; and
at least one of the first adhesive layer and the second adhesive layer is the foaming agent-including adhesive layer.

**18.** The foaming adhesive sheet according to claim 11, wherein the first adhesive layer and the second adhesive layer are the foaming agent-including adhesive layers.

**19.** The foaming adhesive sheet according to claim 18, wherein a tack of the first adhesive layer is 0 gf or more and less than 10 gf, and a tack of the second adhesive layer is 10 gf or more and 400 gf or less.

**20.** The foaming adhesive sheet according to claim 15 or 16, wherein the curable adhesive is an epoxy resin based adhesive; the curable adhesive includes an epoxy resin that is liquid at ordinary temperature; a content of the epoxy resin that is liquid at ordinary temperature in the adhesive layer, with respect to 100 parts by mass of resin components in the adhesive layer, is 60 parts by mass or less.

**21.** The foaming adhesive sheet according to claim 15 or 16, wherein a content of the foaming agent in the adhesive layer, with respect to 100 parts by mass of resin components in the adhesive layer, is 13 parts by mass or more and 30 parts by mass or less.

**22.** The foaming adhesive sheet according to claim 15 or 16, wherein a maximum foaming temperature of the foaming agent is 175°C or more and 220°C or less.

**23.** An adhesive composition comprising a curable adhesive and a foaming agent, wherein

the curable adhesive is a thermosetting adhesive, and the foaming agent is a thermally expandable microcapsule; and
when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, number of bubbles, having a length, in the thickness direction of the foam layer, of more than or equal to a value obtained by subtracting 6 μm from the thickness of the foam layer, is less than 7 per 4 mm length in a direction perpendicular to the thickness direction of the foam layer.

**24.** An adhesive composition comprising a curable adhesive and a foaming agent, wherein

the curable adhesive is a thermosetting adhesive, and the foaming agent is a thermally expandable microcapsule; and
when a foam layer is formed by coating one surface of a supporting body with the adhesive composition in a thickness of 45 μm, and heating a coating film of the adhesive composition, at a temperature ± 20°C of a maximum foaming temperature of the foaming agent for 15 minutes to foam and cure the coating film, in a cross-sectional surface parallel to a thickness direction of the foam layer, number of bubbles, having a length, in the thickness direction of the foam layer, of 100 μm or more, is less than 7 per 4 mm length in a direction perpendicular to the thickness direction of the foam layer.

**25.** The adhesive composition according to claim 23 or 24, wherein the curable adhesive is an epoxy resin based adhesive; the curable adhesive includes an epoxy resin that is liquid at ordinary temperature; a content of the epoxy resin that is liquid at ordinary temperature in the adhesive composition, with respect to 100 parts by mass of resin components in the adhesive composition, is 60 parts by mass or less.

**26.** The adhesive composition according to claim 23 or 24, wherein a content of the foaming agent in the adhesive composition, with respect to 100 parts by mass of resin components in the adhesive composition, is 13 parts by mass or more and 30 parts by mass or less.

**27.** The adhesive composition according to claim 23 or 24, wherein a maximum foaming temperature of the foaming agent is 175°C or more and 220°C or less.

[FIG. 1]

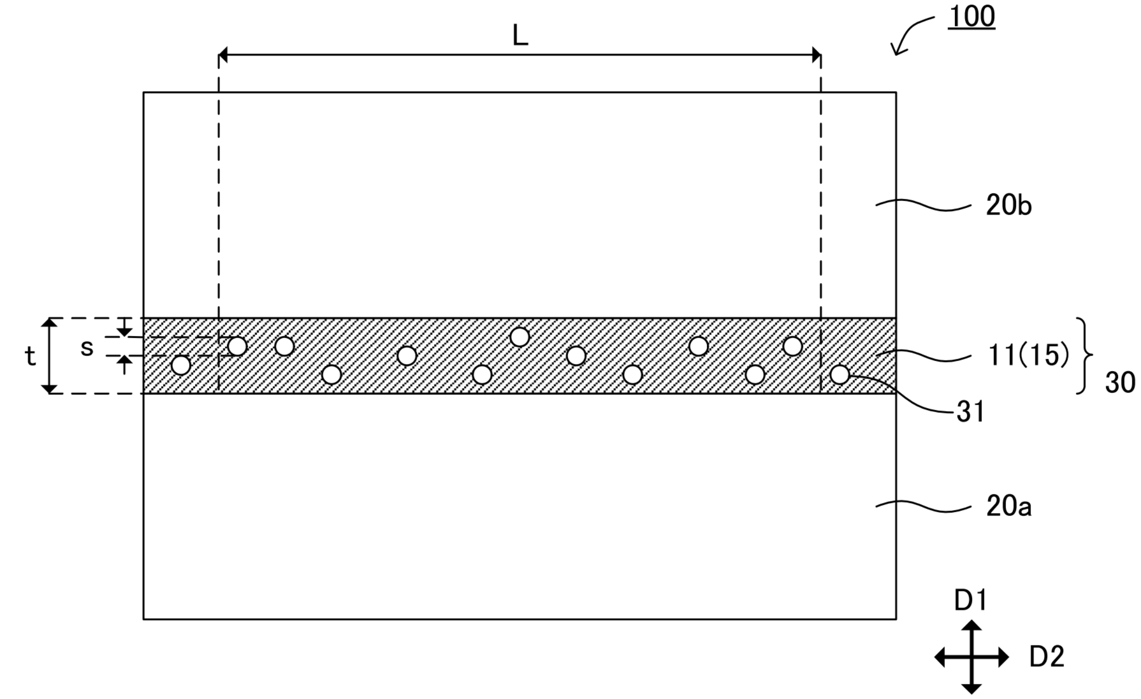
L
100
20b
t
s
11(15)
30
31
20a
D1
D2

[FIG. 2]

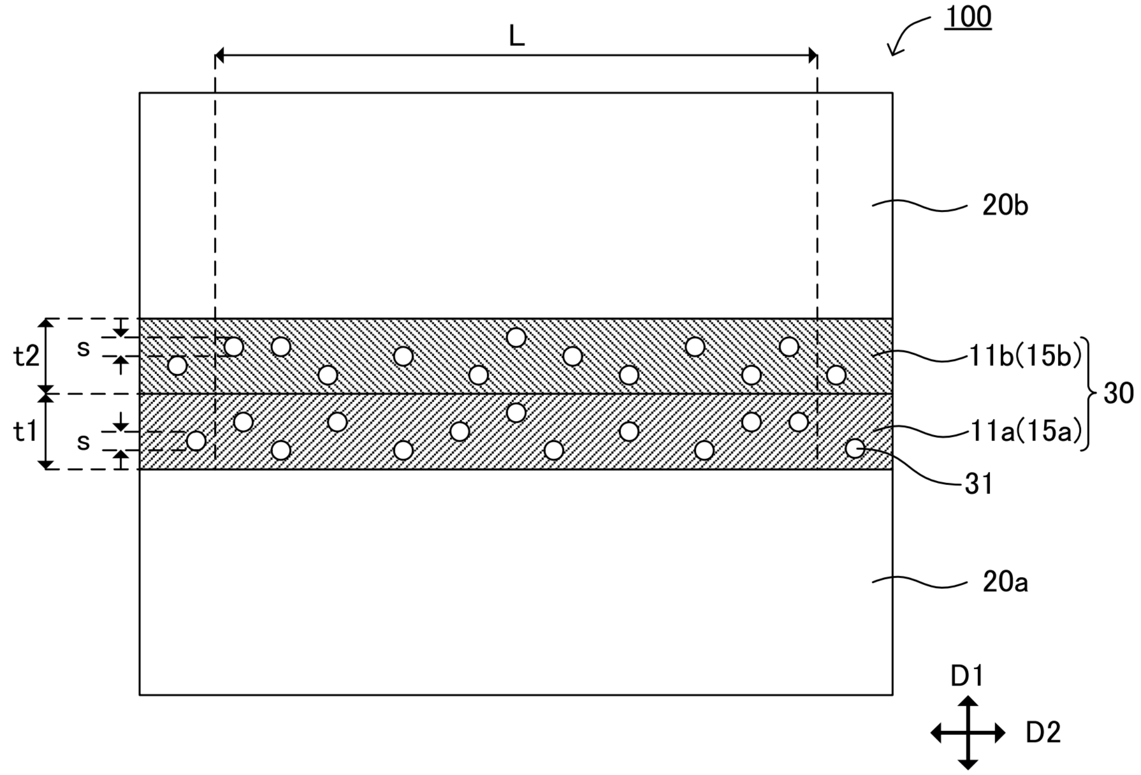
L
100
20b
t2
s
11b(15b)
30
t1
s
11a(15a)
31
20a
D1
D2

[FIG. 3]

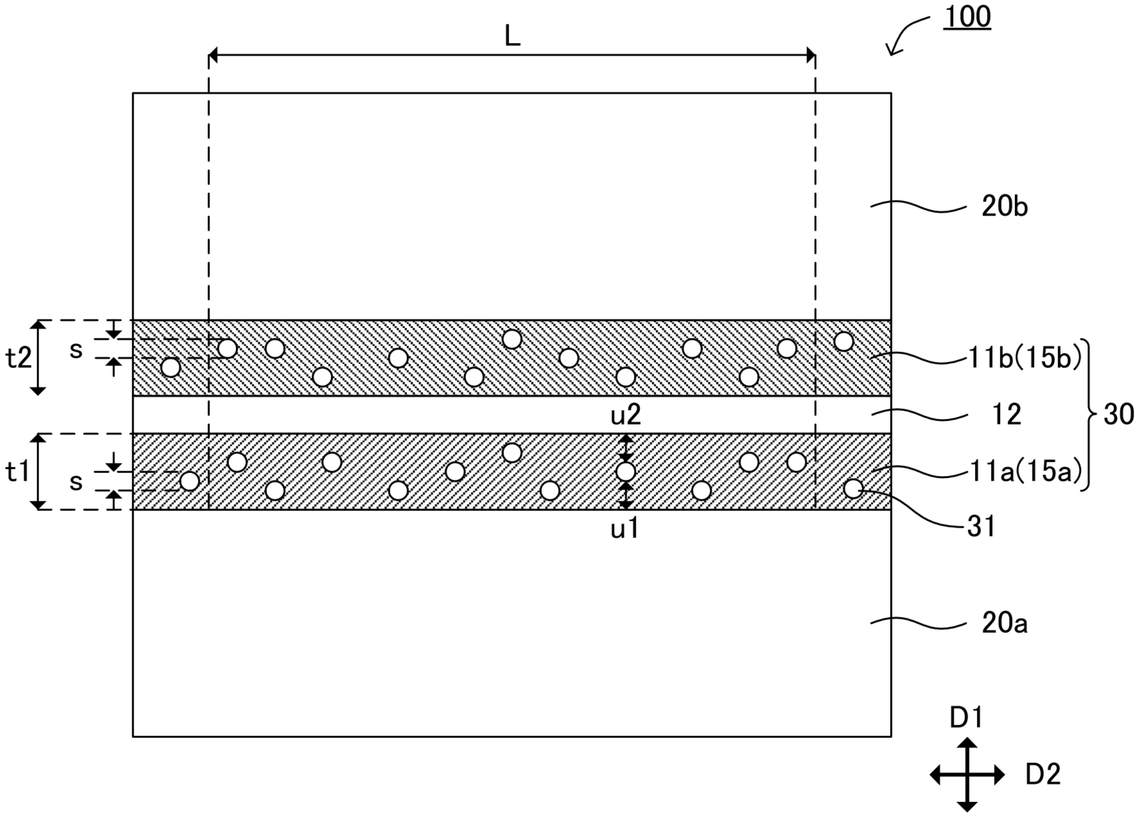
100
L
20b
t2
s
11b(15b)
12
u2
30
t1
s
11a(15a)
31
u1
20a
D1
D2

[FIG. 4]

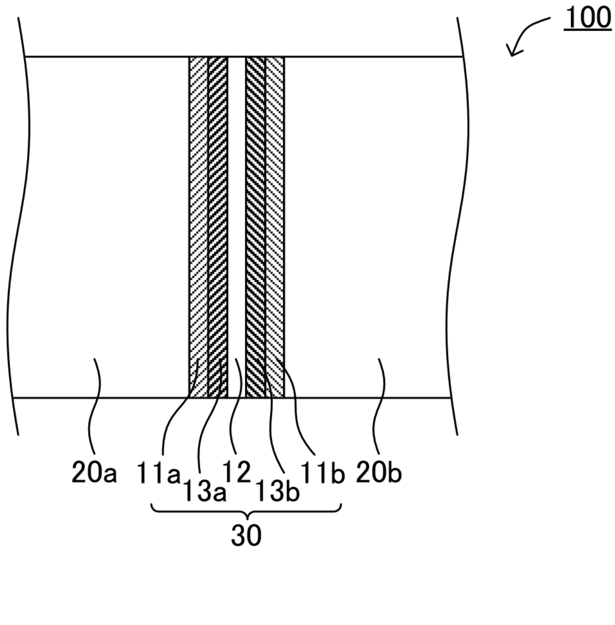
100
20a
11a
13a
12
13b
11b
20b
30

[FIG. 5]

(a)

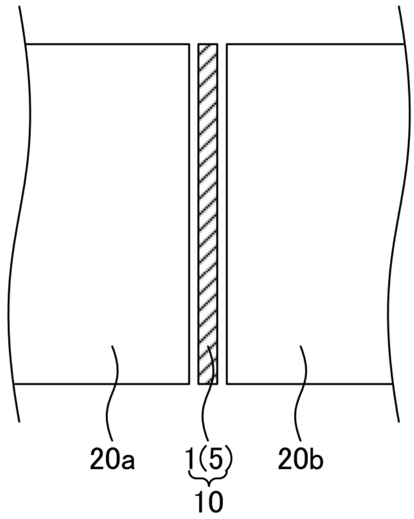


(b)

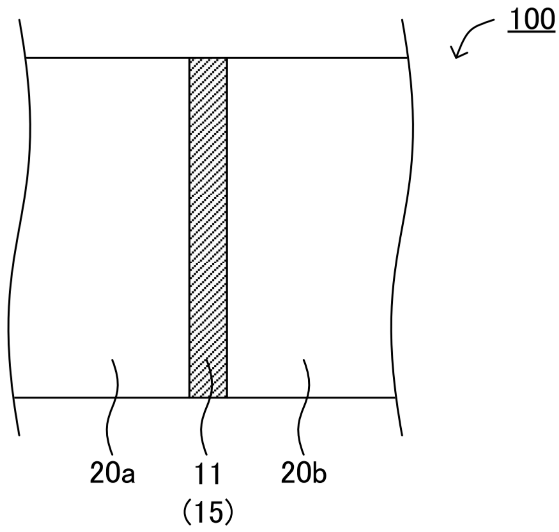

[FIG. 6]

(a)

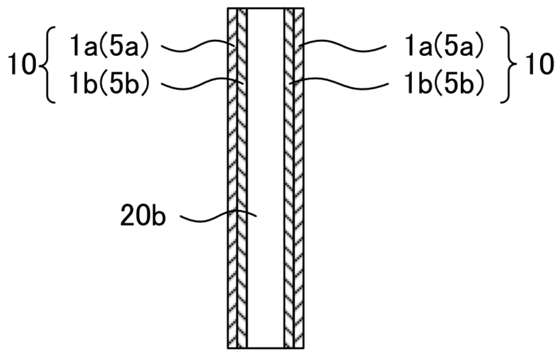
10
1a(5a)
1b(5b)
1a(5a)
1b(5b)
10
20b

(b)

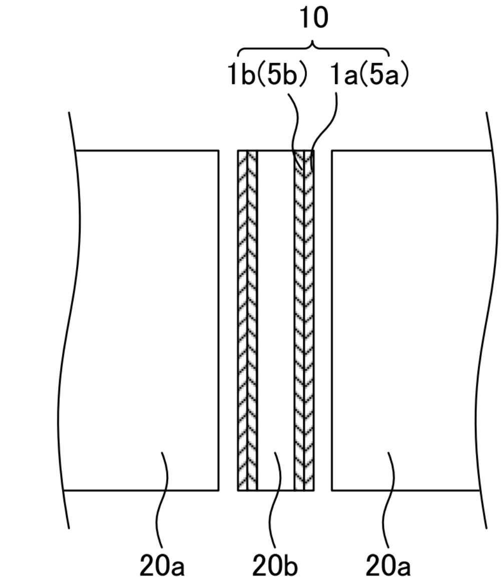
10
1b(5b)
1a(5a)
20a
20b
20a

(c)

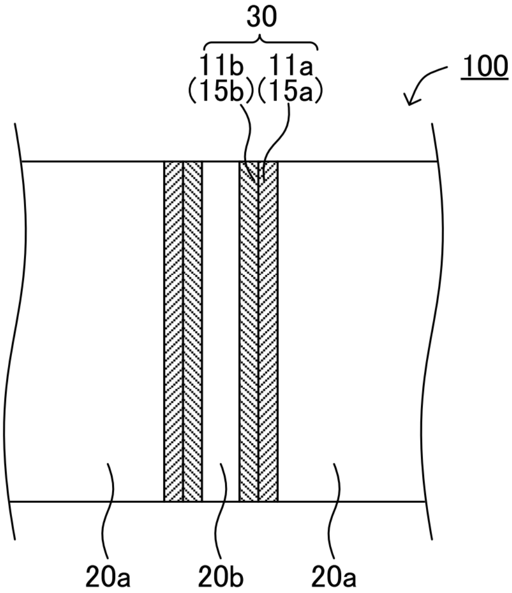
30
11b
(15b)
11a
(15a)
100
20a
20b
20a

[FIG. 7]

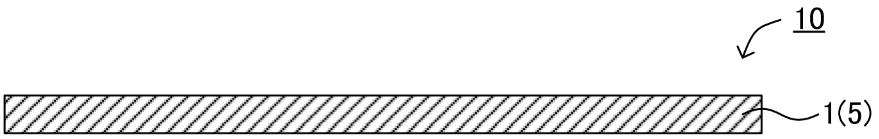


[FIG. 8]

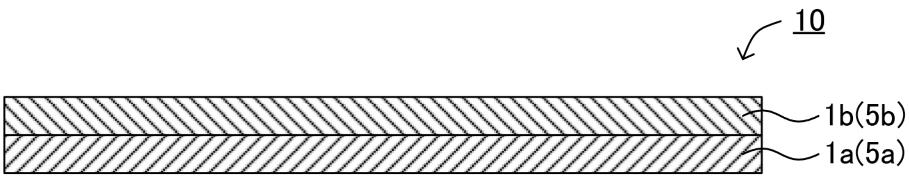


[FIG. 9]

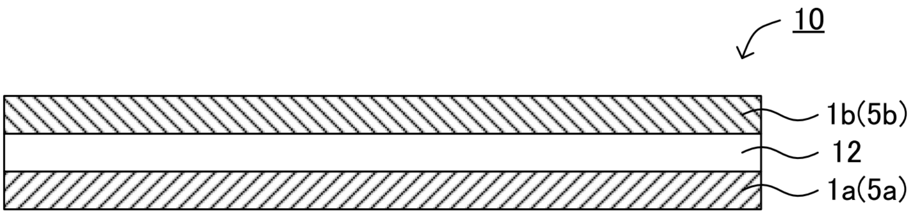


[FIG. 10]

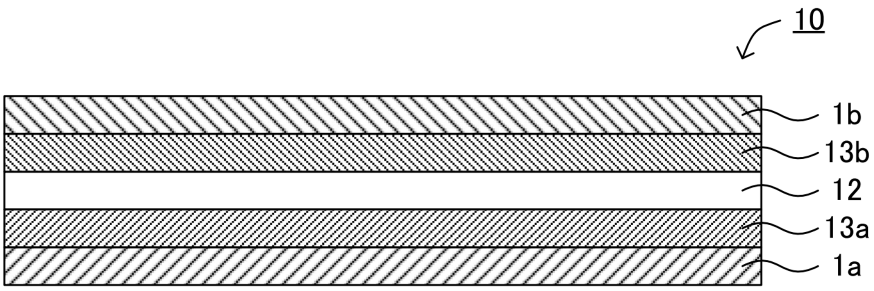

[FIG. 11]

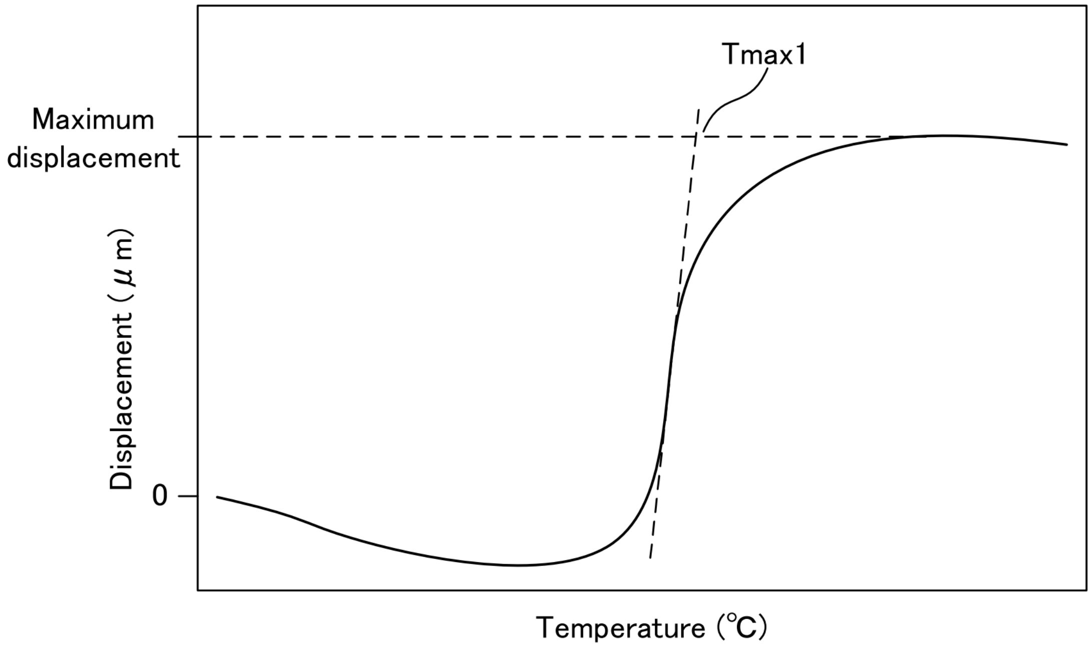
Tmax1
Maximum displacement
Displacement (μm)
0
Temperature (℃)

[FIG. 12]

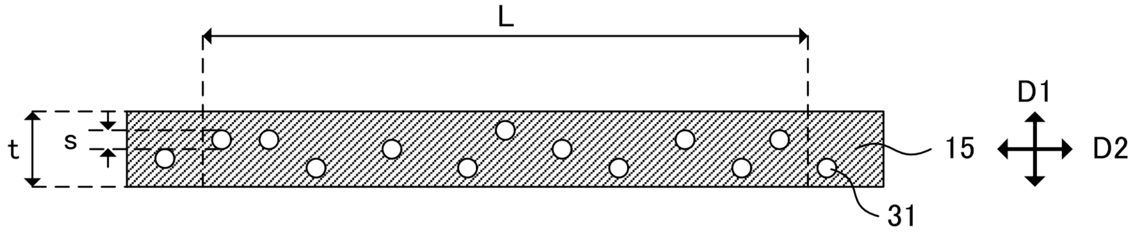
L
t
s
15
31
D1
D2

[FIG. 13]

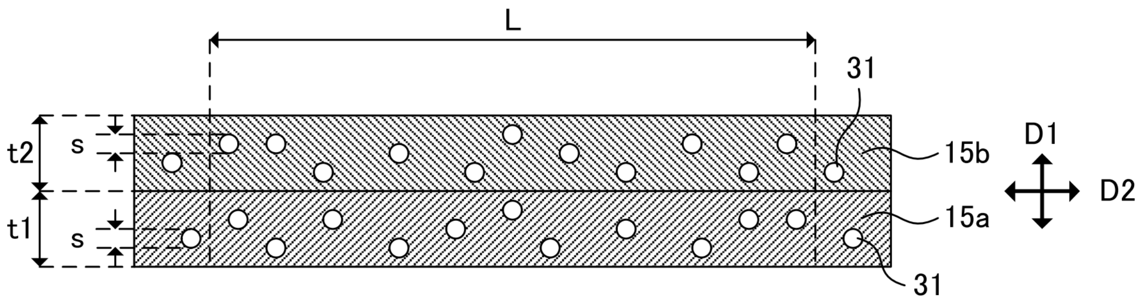


[FIG. 14]

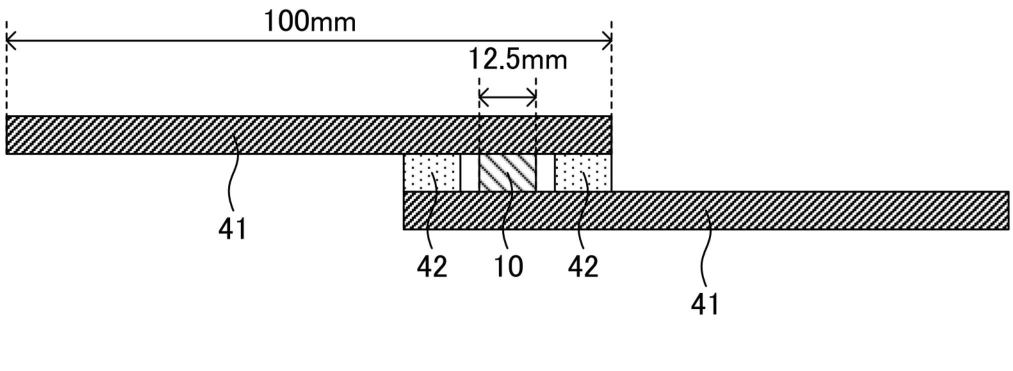

**INTERNATIONAL SEARCH REPORT**

International application No.
**PCT/JP2023/034060**

**A. CLASSIFICATION OF SUBJECT MATTER**

***B32B 5/20***(2006.01)i; ***B32B 27/00***(2006.01)i; ***C09J 7/35***(2018.01)i; ***C09J 11/08***(2006.01)i; ***C09J 163/00***(2006.01)i; ***C09J 201/00***(2006.01)i
FI: B32B5/20; B32B27/00 M; C09J7/35; C09J11/08; C09J163/00; C09J201/00

According to International Patent Classification (IPC) or to both national classification and IPC

**B. FIELDS SEARCHED**

Minimum documentation searched (classification system followed by classification symbols)

B32B1/00-43/00; C09J7/35; C09J11/08; C09J163/00; C09J201/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/193848 A1 (DAI NIPPON PRINTING CO., LTD.) 30 September 2021 (2021-09-30) claims, paragraphs [0057]-[0066], [0074]-[0078], [0083]-[0089], [0127]-[0128], [0170]-[0172], tables 1-3 | 1-14 |
| A | | 15-27 |
| E, X | WO 2023/176134 A1 (DAI NIPPON PRINTING CO., LTD.) 21 September 2023 (2023-09-21) claims, paragraphs [0050]-[0057], [0206]-[0221], examples | 1-27 |
| A | WO 2010/064378 A1 (NITTO DENKO CORPORATION) 10 June 2010 (2010-06-10) paragraphs [0015]-[0017] | 1-27 |
| A | JP 2013-104044 A (3M INNOVATIVE PROPERTIES COMPANY) 30 May 2013 (2013-05-30) claims, paragraphs [0025]-[0026], [0034], table 1 | 1-27 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/034060**

**C. DOCUMENTS CONSIDERED TO BE RELEVANT**

| Category* | Citation of document, with indication, where appropriate, of the relevant passages | Relevant to claim No. |
|---|---|---|
| A | WO 2020/067270 A1 (DAI NIPPON PRINTING CO., LTD.) 02 April 2020 (2020-04-02) claims, paragraphs [0091]-[0094], [0109]-[0110], [0118]-[0119] | 1-27 |
| A | WO 2019/155896 A1 (DIC CORPORATION) 15 August 2019 (2019-08-15) claims, paragraphs [0015], [0080]-[0088] | 1-27 |

Form PCT/ISA/210 (second sheet) (January 2015)

**INTERNATIONAL SEARCH REPORT**
**Information on patent family members**

International application No.
**PCT/JP2023/034060**

| Patent document cited in search report | Publication date (day/month/year) | Patent family member(s) | Publication date (day/month/year) |
|---|---|---|---|
| WO 2021/193848 A1 | 30 September 2021 | US 2023/0146040 A1<br>claims, paragraphs [0068]-[0079], [0096]-[0104], [0145]-[0146], [0200]-[0203], tables 1-3 | |
| | | EP 4129655 A1 | |
| | | CN 115348998 A | |
| | | KR 10-2022-0156557 A | |
| WO 2023/176134 A1 | 21 September 2023 | (Family: none) | |
| WO 2010/064378 A1 | 10 June 2010 | US 2011/0244230 A1<br>paragraphs [0017]-[0019] | |
| | | EP 2371915 A1 | |
| | | CN 102239226 A | |
| | | KR 10-2011-0091531 A | |
| JP 2013-104044 A | 30 May 2013 | (Family: none) | |
| WO 2020/067270 A1 | 02 April 2020 | JP 2020-76059 A | |
| | | US 2021/0332274 A1<br>claims, paragraphs [0110]-[0111], [0131]-[0132], [0149]-[0150] | |
| WO 2019/155896 A1 | 15 August 2019 | CN 111601860 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000053944 A
- JP 6223477 B
- JP 2019214729 A
- JP 2014065889 A


### Non-patent literature cited in the description


- POLYMERHANDBOOK 3rd Edition. John Wiley & Sons, Ink
- **J. BRANDRUP** ; **E. H. IMMERGUT**. Polymer Handbook. WILEY INTERSCIENCE
- Physical and Chemical Science Dictionary Fifth Edition. Iwanami Shoten, Publishers